(19) Europäisches Patentamt

European Patent Office

Office européen des brevets

(11) Veröffentlichungsnummer: **0 317 741 B1**

(12) **EUROPÄISCHE PATENTSCHRIFT**

(45) Veröffentlichungstag der Patentschrift: **12.08.92**

(21) Anmeldenummer: **88116315.8**

(22) Anmeldetag: **03.10.88**

(51) Int. Cl.⁵: **C08G 18/80**, C08G 18/78, C09D 175/00

(54) **PUR-Pulverlacke für matte Überzüge.**

(30) Priorität: **21.11.87 DE 3739479**

(43) Veröffentlichungstag der Anmeldung:
**31.05.89 Patentblatt 89/22**

(45) Bekanntmachung des Hinweises auf die
Patenterteilung:
**12.08.92 Patentblatt 92/33**

(84) Benannte Vertragsstaaten:
**AT BE CH DE ES FR GB IT LI NL SE**

(56) Entgegenhaltungen:
**DE-A- 2 261 065**
**DE-A- 2 945 113**
**DE-A- 3 143 060**

(73) Patentinhaber: **HÜLS AKTIENGESELLSCHAFT**
**Patentabteilung / PB 15 - Postfach 13 20**
**W-4370 Marl 1(DE)**

(72) Erfinder: **Gras, Rainer, Dr.**
**Im Ostholz 49 a**
**W-4630 Bochum 5(DE)**

EP 0 317 741 B1

**Beschreibung**

Die vorliegende Erfindung betrifft PUR-Pulverlacke für matte Überzüge auf der Basis von hydroxylgruppenhaltigen Polymeren und harnstoffgruppenhaltigen Polyisocyanaten als Härter.

Für viele Beschichtungen ist hoher Glanz nicht erwünscht. Die Ursache dafür ist in der Regel praktischer Natur. Glänzende Oberflächen erfordern ein höheres Maß an Reinigung als matte Oberflächen; zudem kann es aus sicherheitstechnischen Gründen erforderlich sein, stark reflektierende Oberflächen zu vermeiden.

Mit Hilfe von Mattierungsmitteln lassen sich zwar auf einfache Weise matte Oberflächen erzielen, indem man dem Pulverlack je nach gewünschtem Glanzgrad kleinere oder größere Mengen an Füllstoffen, wie Kreide, feinverteiltes Siliciumdioxid oder Bariumsulfat beimischt. Allerdings beeinflussen diese Zuschlagstoffe die mechanischen Filmeigenschaften in negativer Weise; außerdem sind die Lackfilme häufig porös.

Die Zugabe von organischen, polymeren Zuschlagstoffen wie Polypropylenwachse und Cellulosederivate führen zwar ebenfalls zur Mattierung, jedoch ist hierbei die Reproduzierbarkeit des Matteffektes nicht gewährleistet.

Schließlich ist eine Mattierung auch durch trockenes Mischen verschiedener Pulver, gegebenenfalls unterschiedlicher Reaktivität, zu erreichen. Als nachteilig ist die umständliche und aufwendige Aufbereitung sowie die mangelnde Reproduzierbarkeit des gewünschten Glanzgrades zu sehen (siehe z. B. DE-OSS 21 47 653 und 22 47 779).

Das in der japanischen Offenlegungsschrift 79/36339 beschriebene Pulverlacksystem für matte Beschichtungen besteht aus:

a) 95 bis 20 % eines PUR-Systems aus einem Polyesterpolyol mit einem Erweichungspunkt von 65 bis 130 °C und einem blockierten Polyisocyanat sowie

b) 5 bis 80 % eines Epoxyacrylsystems aus einem Glycidylethergruppentragenden Acrylatharz, welches mit einer Dicarbonsäure gehärtet wird.

Bei diesem Pulverlacksystem treten die bei der Mattierung durch Mischen von Pulvern erwähnten Nachteile auf, wobei es darüber hinaus bei Anwendung von Pulvern unterschiedlicher Reaktivität durch innere Spannungen der unter verschiedenen Bedingungen ausgehärteten unterschiedlichen Bindemittelsysteme zu einer Minderung lacktechnischer Eigenschaften kommt.

In der DE-PS 23 24 696 wird ein Verfahren zur Herstellung von Überzügen mit matter Oberfläche beschrieben, in welchem das Salz von cyclischen Amidinen mit bestimmten Polycarbonsäuren zur Härtung von Epoxidharzen verwendet wird.

Für Pulverlacke, die als Bindemittelkomponente Epoxidharze enthalten und lediglich im Innenbereich eingesetzt werden, können mit dem in der DE-PS 23 24 696 vorgestellten Matthärtern die bis dahin üblichen und mit vielen Nachteilen behafteten Verfahren zur Mattierung durch Zusatz von Füllstoffen und/oder durch Unverträglichkeit der eingesetzten Bindemittelkomponenten und/oder durch trockenes Mischen verschiedener Pulver gegebenenfalls unterschiedlicher Reaktivität umgangen werden.

Für die Herstellung von wetterstabilen und lichtechten Überzügen eignen sich die genannten Epoxidharz-Pulverlacke nicht. Für diesen Anwendungssektor werden Bindemittel auf Basis von hydroxylgruppenhaltigen, gesättigten Polyestern und/oder Acrylaten sowie Polyisocyanaten, z. B. 3-Isocyanatomethyl-3.5.5-trimethylcyclohexylisocyanat, auch Isophorondiisocyanat (IPDI) genannt, eingesetzt.

In der DE-OS 32 32 463 werden derartige witterungsstabile Pulverlacke beschrieben, die allerdings neben Epsilon-Caprolactam blockierten Isocyanatgruppen im Molekül noch Carboxylgruppen in einem bestimmten Verhältnis enthalten. Das hat den Nachteil, daß neben hydroxylgruppenhaltigen Polyestern eine dritte Bindemittelkomponente, nämlich Polyepoxide, eingesetzt werden muß.

Schließlich werden auch in der DE-OS 33 28 129 Polyurethan-Pulverlacke für matte Überzüge beschrieben, die drei Bindemittelkomponenten zur Grundlage haben. Hierbei wird neben dem hydroxylgruppenhaltigen Polyester und blockiertem Polyisocyanat noch Pyromellitsäuredianhydrid verwendet.

Auch diese Verfahrensweisen sind mit dem Nachteil der nicht gewährleisteten Reproduzierbarkeit des Matteffektes behaftet.

Für diese Polyurethan-Pulverlacke, die aufgrund ihrer Wetterstabilität für Anwendungen im Außenbereich eingesetzt werden können, mußten bei der Herstellung matter Pulver bisher bekannte Verfahrensweisen unter Inkaufnahme der beträchtlichen Nachteile angewendet werden, d. h.

a) die genannten Nachteile bei der Mattierung durch Füllstoffzusatz

b) die genannten Nachteile bei der Mattierung durch Unverträglichkeit der verwendeten Bindemittelkomponenten

c) die genannten Nachteile bei der Mattierung durch Mischen verschiedener Pulver

d) die genannten Nachteile bei der Mattierung durch Einsatz dreier Bindemittelkomponenten.

Aufgabe der vorliegenden Erfindung ist es, die Nachteile des Standes der Technik zu überwinden und ein Verfahren zur Herstellung von lagerstabilen, wärmehärtbaren Überzügen auf Polyurethanbasis mit matter und nach dem Einbrennen gut verlaufener Oberfläche zu finden.

Überraschenderweise wurde nun gefunden, daß man Pulverlacke mit matter Oberfläche auch bei der Verwendung von nur zwei Bindemittelkomponenten erhält, wenn man für die Vernetzung von hydroxylgruppenhaltigen Polymeren spezielle reversibel blockierte Polyisocyanate mit Harnstoffstruktur einsetzt.

Zwar werden bereits in der DE-OS 31 43 060 Epsilon-Caprolactam-blockierte harnstoffgruppenhaltige IPDI-Addukte zur Herstellung von PUR-Pulverlacken beschrieben und beansprucht. Hierbei handelt es sich jedoch ausschließlich um PUR-Pulverlacke, deren Lackfilme glänzende Oberflächen aufweisen. Das ist auch aufgrund dieser Lehre durchaus verständlich, da die Vernetzer zwar Harnstoffgruppen enthalten, jedoch sind diese IPDI-Harnstoff-Addukte in hohem Maß mit blockiertem monomerem IPDI vermischt. Die hohe Konzentration des blockierten monomeren IPDI ist bestimmend für den Glanzgrad, also den Hochglanz, wie in den Beispielen auch belegt worden ist. Die Harnstoffgruppen wiederum sind für die Verbesserung der Lagerstabilität des sprühfertigen Pulvers verantwortlich.

Gegenstand der Erfindung sind daher PUR-Pulverlacke für matte Überzüge auf der Grundlage von Mischungen aus hydroxylgruppenhaltigen Polymeren und Polyisocyanat-Harnstoff-Addukten sowie üblichen Zuschlagstoffen, welche dadurch gekennzeichnet sind, daß die Mischungen aus

A partiell oder vollständig blockierten Polyisocyanat-Harnstoffaddukten aus Polyisocyanaten und Polyaminen mit einem NCO-Gehalt von 8 bis 15 Gew.-%, vorzugsweise 9 bis 13 Gew.-%, und einem freien NCO-Gehalt bis zu 4 Gew.-%, insbesondere bis zu 3 Gew.-%, und

B aus hydroxylgruppenhaltigen Polymeren mit mehr als zwei OH-Gruppen im Molekül

bestehen,

wobei das Polyisocyanat der Komponente A ein halbblockiertes Polyisocyanat mit einem Siedepunkt im Vakuum von 0,133 mbar ist und erhalten wurde durch Zugabe des Blockierungsmittels zu der 5- bis 20-fachen Menge an Polyisocyanat und anschließende Dünnschichtdestillation zur Entfernung von monomerem, unblockiertem Polyisocyanat bis auf einen Gehalt von bis zu 6,5 Gew.-%, vorzugsweise bis zu 2,5 Gew.-%.

Das Polyisocyanat der Komponente A soll einen Siedepunkt im Vakuum unterhalb der Deblockierungstemperatur des eingesetzten Blockierungsmittels besitzen und das halbblockierte Polyisocyanat wird durch die Dünnschichtdestillation vom monomeren unblockierten Polyisocyanat bis auf einen Gehalt von bis zu 6,5 Gew.-%, vorzugsweise bis zu 2,5 Gew.-%, befreit.

Die Herstellung der erfindungsgemäßen PUR-Pulverlacke mit reduziertem Glanz wurde erwogen, als es gelungen war, die heftige Reaktion zwischen primären und/oder sekundären Polyaminen mit Polyisocyanaten so zu beherrschen, daß die Bildung von hochschmelzenden, den Verlauf der Lackoberflächen negativ beeinflussenden Polyharnstoffen überwunden werden konnte.

Diese gezielte Umsetzung von Polyisocyanaten und Polyaminen wurde durch die Verwendung eines partiell blockierten Polyisocyanats mit einem Gehalt an monomerem Polyisocyanat von bis zu 6,5 Gew.-%, vorzugsweise bis zu 2,5 Gew.-%, möglich.

Die Herstellung dieser partiell blockierten Polyisocyanate ist Gegenstand einer gesonderten Patentanmeldung und erfolgt dadurch, daß man dem Polyisocyanat in großem Überschuß - 5 bis 20 Mol - das Blockierungsmittel - 1 Mol - bei Temperaturen von 50 bis 130 °C zusetzt und anschließend das überschüssige Polyisocyanat mittels Dünnschichtdestillation abtrennt.

Aus diesen partiell blockierten Polyisocyanaten erfolgt mit Polyaminen die Harnstoffbildung, die hier nicht beansprucht wird. Das Amin-/Isocyanatgruppen-Verhältnis beträgt dabei 1 : 1 bis 1 : 1,3, bevorzugt 1 : 1 bis 1 : 1,2.

Die erfindungsgemäß einzusetzenden Härter können in der Regel bevorzugt aus den technisch leicht zugänglichen Polyisocyanaten wie aliphatische oder cycloaliphatische Diisocyanate, insbesondere aus Isophorondiisocyanat (IPDI), Hexamethylendiisocyanat-1.6 (HDI), 2-Methylpentandiisocyanat-1.5 (DI51) und 2.4- bzw. 2.6-Toluylendiisocyanat sowie deren Isomerengemische hergestellt werden. Das zur Dünnschichtdestillation eingesetzte Polyisocyanat soll einen Siedepunkt im Vakuum unterhalb der Deblockierungstemperatur des eingesetzten Blockierungsmittels besitzen.

Das Polyamin in A ist ein aliphatisches, cycloaliphatisches, heterocyclisches oder aromatisches Diamin oder Polyamin. Für die Herstellung der erfindungsgemäßen Härter bevorzugte Polyamine sind Dodecamethylendiamin-1.12, Tetraethylenpentamin, Pentaethylenhexamin, 3.3'-Dimethyl-4.4'-diaminodicyclohexylmethan, 4.4'-Diaminodiphenylmethan.

Weiterhin sind erfindungsgemäß Gemische aus Isophorondiamin und aliphatischen Polyaminen, insbesondere 2.2.4(2.4.4)-Trimethylhexamethylendiamin-1.6, einsetzbar.

Ganz besonders bevorzugte Diamine zur Herstellung der erfindungsgemäßen Härter sind Isophorondi-

3

amin, 4.4'-Diaminodicyclohexylmethan und Bis-(1.4-aminomethyl)-cyclohexan sowie deren Isomerengemische und Gemische untereinander.

Als Blockierungsmittel werden bevorzugt Lactame und Oxime, insbesondere Epsilon-Caprolactam und Methylethylketoxim eingesetzt.

Die Herstellung der erfindungsgemäßen Härter erfolgt in Gegenwart geeigneter Lösungsmittel, wie Toluol, Cyclohexan, Spezialbenzin (= 1 Vol-% Aromaten), Essigester oder Aceton.

Die Umsetzung erfolgt im allgemeinen zwischen RT und 80 °C, vorzugsweise zwischen RT und 70 °C. Das Polyisocyanat wird im Lösungsmittel gelöst und das Polyamin entweder in Substanz oder im Lösungsmittel gelöst, so zugetropft, daß die Reaktionstemperatur 70 °C nicht übersteigt. Nach Beendigung der Reaktion - kontrolliert mittels titrimetrischer NCO-Bestimmung - wird das Reaktionsprodukt vom Lösungsmittel im Vakuum befreit. Besonders geeignet zur Beseitigung des Lösungsmittels ist die Schmelzextrusion in einer Ausdampfschnecke.

Als besonders geeignet hat sich ein Verfahren zur Herstellung der erfindungsgemäßen Härter erwiesen, wenn das partiell blockierte Polyisocyanat in Spezialbenzinen mit ≧ 1 Vol-% Aromaten oder Cyclohexan gelöst wird und das Polyamin, in Substanz oder gelöst in Spezialbenzin oder Cyclohexan, bei Raumtemperatur so zugetropft wird, daß die Reaktionstemperatur 70 °C nicht übersteigt. Hierbei fällt das Additionsprodukt aus und wird nach Beendigung der Reaktion vom Lösemittel auf einfache Weise befreit.

Vorteilhaft können die Isocyanat-Polyaddition beschleunigenden Katalysatoren als auch die Verlaufmittel - beide werden üblicherweise separat als Polyester-Masterbatch dem Pulverlack zugesetzt - den Polyisocyanat-Harnstoff-Addukten direkt zugesetzt werden. Bevorzugt finden organische Zinnverbindungen wie Zinn-II-acetat, -oleat, -octoat, -laurat, Dibutylzinndilaurat (DBTL), Dibutylzinnmaleat oder Dibutylzinndiacetat als Katalysator Verwendung. Die Katalysatoren werden im allgemeinen in einer Menge zwischen 0,05 und 1,5, vorzugsweise 0,1 und 0,5 Gew.-%, bezogen auf die Gesamtmenge der eingesetzten Reaktanten, eingesetzt.

Die erfindungsgemäß eingesetzten partiell oder total blockierten Harnstoffgruppen aufweisenden Polyisocyanate sind mahlbar bzw. pulverisierbar und lassen sich in dieser Form in den Reaktionspartnern homogen verteilen. Im allgemeinen besitzen sie einen Gesamt-NCO-Gehalt von 8 bis 15 Gew.-%, vorzugsweise von 9 bis 13 Gew.-% und einen freien NCO-Gehalt von 0 bis 4 Gew.-%, vorzugsweise bis zu 3 Gew.-%. Der Schmelzbereich liegt zwischen 90 und 220 °C, vorzugsweise zwischen 120 und 185 °C.

Als Reaktionspartner kommen Verbindungen infrage, die solche funktionellen Gruppen tragen, die sich mit Isocyanatgruppen während des Härtungsprozesses in Abhängigkeit von der Temperatur und Zeit umsetzen, z. B. Hydroxyl-, Carboxyl-, Mercapto-, Amino-, Urethan- und (Thio)-Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Melaminabkömmlinge, Celluloseester und -ether, teilweise verseifte Homo- und Copolymerisate von Vinylestern, insbesondere aber Polyester und Acrylatharze.

Die erfindungsgemäß eingesetzten hydroxylgruppenhaltigen Polyester haben eine OH-Funktionalität von 2,5 bis 5, bevorzugt von 3 bis 4,2, ein mittleres Molekulargewicht von 1 800 bis 5 000, bevorzugt von 2 300 bis 4 500, eine OH-Zahl von 25 bis 120 mg KOH/g, bevorzugt von 30 bis 90 mg KOH/g, eine Viskosität von < 80 000 mPa•s, bevorzugt von < 50 000 mPa•s, besonders bevorzugt von < 40 000 mPa•s bei 160 °C und einem Schmelzpunkt von ≧ 70 °C bis ≦ 120 °C, bevorzugt von ≧ 75 °C bis ≦ 100 °C.

Besonders bevorzugte, erfindungsgemäß eingesetzte hydroxylgruppenhaltige Polyester weisen eine Funktionalität von 3,5 bis 3,9 auf, haben eine OH- Zahl von 35 bis 85 mg KOH/g, ein mittleres Molekulargewicht von 2 800 bis 3 500, eine Viskosität < 40 000 mPa•s und einen Schmelzpunkt ≧ 75 bis ≦ 100 °C.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt:
Bernstein-, Adipin-, Kork-, Azelain-, Sebacin-, Phthal-, Terephthal-, Isophthal-, Trimellith-, Pyromellith-, Tetrahydrophthal-, Hexahydrophthal-, Hexahydroterephthal-, Di- und Tetrachlorphthal-, Endomethylentetrahydrophthal-,Glutar-, Malein- und Fumarsäure bzw. - soweit zugänglich - deren Anhydride, Terephthalsäuredimethylester, Terephthalsäure-bis-glykolester, weiterhin cyclische Monocarbonsäuren wie Benzoesäure, p-tert.-Butylbenzoesäure oder Hexahydrobenzoesäure.

Als mehrwertige Alkohole kommen z. B. Ethylenglykol, Propylenglykol-1.2 und -1.3, Butylenglykol-1.4 und -2.3, Di-beta-hydroxyethylbutandiol, Hexandiol-1.6, Octandiol-1.8, Neopentylglykol, Cyclohexandiol, Bis-(1.4-hydroxymethyl)-cyclohexan, 2.2-Bis-(4-hydroxycyclohexyl)-propan, 2.2-Bis-[4-(beta-hydroxyethoxy)-phenyl]-propan, 2-Methyl-propandiol-1.3, 3-Methyl-pentandiol-1.5, 2.2.4(2.4.4)-Trimethylhexandiol-1.6, Glycerin, Trimethylolpropan, Trimethylolethan, Hexantriol-1.2.6, Butantriol-1.2.4, Tris(beta-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester infrage.

Auch Mono- und Polyester aus Lactonen, z. B. Epsilon-Caprolacton oder Hydroxycarbonsäuren, z. B. Hydroxypivalinsäure, Omega-Hydroxydecansäure, Omega-Hydroxycapronsäure, Thioglykolsäure können eingesetzt werden. Polyester aus den obengenannten Polycarbonsäuren bzw. deren Derivaten und Polyphenolen, wie Hydrochinon, Bisphenol A, 4.4'-Dihydroxybiphenyl oder Bis-(4-hydroxyphenyl)-sulfon; Polyester der Kohlensäure, die aus Hydrochinon, Diphenylpropan, p-Xylylenglykol, Ethylenglykol, Butandiol oder Hexandiol-1.6 und anderen Polyolen durch übliche Kondensationsreaktionen, z. B. mit Phosgen oder Diethyl- bzw. Diphenylcarbonat, oder aus cyclischen Carbonaten wie Glykolcarbonat oder Vinylidencarbonat, durch Polymerisation in bekannter Weise erhältlich sind; Polyester der Kieselsäure, Polyester der Phosphorsäure, z. B. aus Methan-, Ethan-, Beta-Chlorethan-, Benzol- oder Styrolphosphorsäure-, -phosphorsäurechlorid oder -phosphorsäureester und Polyalkoholen oder Polyphenolen der obengenannten Art; Polyester der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxan-dihydriden an Olefine, wie Alkylalkohol oder Acrylsäure, erhältlichen Produkte.

Bevorzugte Polyester sind z. B. auch die Reaktionsprodukte von Polycarbonsäuren und Glycidylverbindungen, wie sie z. B. in der DE-OS 24 10 513 beschrieben sind.

Beispiele für Glycidylverbindungen, die verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat, Alkylenoxide mit 4 bis 18 Kohlenstoffatomen, wie Butylenoxid und Glycidylether, wie Octylglycidylether.

Als Dicarbonsäuren können bei diesem Verfahren sämtliche unter II im folgenden aufgeführte Polycarbonsäuren verwendet werden. Monocarbonsäuren, welche beispielsweise unter III aufgeführt sind, können ebenfalls eingesetzt werden.

Bevorzugte Komponenten sind auch monomere Ester, z. B. Dicarbonsäure-bis-(hydroxyalkohol)ester, Monocarbonsäureester von mehr als zweiwertigen Polyolen und Oligoester, die durch Kondensationsreaktionen aus in der Lackchemie üblichen Rohstoffen hergestellt werden können. Als solche sind z. B. anzusehen:

I. Alkohole mit 2 bis 24, vorzugsweise 2 bis 10 C-Atomen, und 2 bis 6 an nichtaromatischen C-Atomen gebundenen OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit.

II. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellithsäure, Pyromellithsäure, Azelainsäure;

III. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosölfettsäure, Sojaölfettsäure, Ricinenfettsäure, hydrierte und isomerisierte Fettsäuren, wie "Konjuvandol"-fettsäure sowie deren Gemische, wobei die Fettsäuren auch als Glyceride einsetzbar sind und unter Umesterung und/oder Dehydratisierung umgesetzt werden können;

VI. einwertige Alkohole mit 1 bis 18 C-Atomen, z. B. Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl), Bd. 14/2, 1-5, 21-23, 40-44, Georg Thieme Verlag, Stuttgart, 1963 oder bei C. R. Martens, Alkyd Resins, 51-59, Reinhold Plastics Appl. Series, Reinhold Publishing Comp., New York, 1961 beschrieben ist.

Bevorzugte Acrylatharze, welche als OH-Komponente verwendet werden können, sind Homo- oder Copolymerisate, wobei z. B. folgende Monomere als Ausgangsprodukte gewählt werden können:

Ester der Acrylsäure und Methacrylsäure mit zweiwertigen, gesättigten, aliphatischen Alkoholen mit 2 bis 4 C-Atomen, wie z. B. 2-Hydroxyethylacrylat, 2-Hydroxypropylacrylat, 4-Hydroxybutylacrylat und die entsprechenden Methacrylsäureester; Acrylsäure und Methacrylsäurealkylester mit 1 bis 18, vorzugsweise 1 bis 8 C-Atomen in der Alkoholkomponente, wie z. B. Methacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylsäureester; Acrylsäure- und Methacrylsäurecyclohexylester; Acrylnitril und Methacrylnitril; Acrylamid und Methacrylamid; N-Methoxymethyl(meth)acrylsäureamid.

Besonders bevorzugte Acrylharze sind Copolymere aus

a. 0 bis 50 Gew.-% Monoester der Acryl- oder Methacrylsäure mit zwei-oder mehrwertigen Alkoholen, wie Butandiol-(1,4)-monoacrylat, Hydroxypropyl(meth)acrylat; ferner Vinylglykol, Vinylthioethanol, Allylalkohol, Butandiol-1,4-monovinylether;

b. 5 bis 95 Gew.-% Ester der Acrylsäure oder Methacrylsäure mit einwertigen Alkoholen, die 1 bis 12 Kohlenstoffatome enthalten, wie z. B. Methylmethacrylat, Ethylacrylat, n-Butylacrylat oder 2-Ethylhexylacrylat;

c. 0 bis 50 Gew.-% aromatische Vinylverbindungen, wie Styrol, Methylstyrol oder Vinyltoluol;

d. 0 bis 20 Gew.-% andere Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol(meth)acrylamid sowie Glycidyl(meth)acrylat, wobei der Anteil der Gruppe a. und/oder d. mindestens 5 Gew.-% beträgt.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat oder Azodiisobutyronitril verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, Propylenoxid, Butylenoxid, Trimethylenoxid, 3,3-Bis-(chlor-methyl)-oxacyclobutan, Tetrahydrofuran, Styroloxid, dem Bis-(2,5)-epoxypropylether des Diphenylolpropans oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1,3) oder -(1,2), Pentamethylenglykol, Hexandiol, Decamethylenglykol, Trimethylolpropan, 4.4'-Dihydroxydiphenylpropan, Anilin, Ammoniak, Ethanolamin, Ethylendiamin, Di(beta-hydroxypropyl)-methylamin, Di-(beta-hydroxyethyl)-anilin, Hydrazin, sowie auch hydroxyalkylierten Phenolen, wie z. B. 0,0-Di-(beta-hydroxyethyl)-resorcin, hergestellt werden.

Ebenso können hydroxylgruppenhaltige Polyurethane und/oder Polyharnstoffe eingesetzt werden.

Als Polyhydroxylverbindungen können selbstverständlich Gemische mehrerer Stoffe eingesetzt werden.

Das Mischungsverhältnis von hydroxylgruppenhaltigen Polymeren und Isocyanatkomponente wird in der Regel so gewählt, daß auf eine OH-Gruppe 0,6 bis 1,2, bevorzugt 0,8 bis 1,1, ganz besonders bevorzugt 1,0 NCO-Gruppen kommen.

Mit den erfindungsgemäßen PUR-Pulverlacken lassen sich in der Regel Glanzgrade bis zu 10, gemessen nach Gardner im GG 60° ∡ erreichen. Der Glanzgrad ist auf verschiedene Weise in weiten Bereichen einstellbar.

Die Isocyanatkomponente wird mit dem hydroxylgruppenhaltigen Polymeren und gegebenenfalls Katalysatoren - beschrieben in Zusammenhang mit der Herstellung der Polyisocyanat-Harnstoff-Addukte -, gegebenenfalls weiteren Zusätzen, wie Pigmenten, Füllstoffen in Mengen bis zu 45 Gew-% und Verlaufmitteln, z. B. Siliconöl, flüssigen Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 10 Minuten auf eine Temperatur von 160 bis 220 °C, vorzugsweise 30 bis 10 Minuten, bei 180 bis 210 °C erhitzt.

Die Erfindung wird durch die nachstehenden Beispiele illustriert:

Experimenteller Teil

A Herstellung der partiell blockierten Polyisocyanate

Allgemeine Herstellungsvorschrift

Zu 5 bis 20 Mol Polyisocyanat werden bei 70 bis 80 °C unter Rühren portionsweise 1 Mol Blockierungsmittel zugegeben. Nach beendeter Blokkierungsmittelzugabe wird das Reaktionsgemisch noch eine Stunde bei 100 °C erhitzt und anschließend das nicht umgesetzte Polyisocyanat mittels Dünnschichtdestillation zwischen 90 und 140 °C und 0,133 mbar entfernt. Vom Reaktionsprodukt (Rückstand) wurden die chemischen und physikalischen Kenndaten ermittelt und in der folgenden Tabelle zusammengefaßt:

Partiell blockierte Polyisocyanate

| Beispiele | Ausgangsstoffe | | NCO-Gehalt in Gew.-% | | Polyisocyanat monomer Gew.-% | Viskosität in mPa·s bei °C | | | | |
|---|---|---|---|---|---|---|---|---|---|---|
| A | Poly-isocyanat | Blockierungsmittel | frei | gesamt | | 25 | 30 | 40 | 50 | 70 |
| 1 | IPDI | Caprolactam | 11,6 | 24,7 | 1,1 | 1250000 | 410000 | 63500 | 13700 | 1250 |
| 2 | IPDI | Caprolactam | 11,5 | 24,5 | 2,2 | 1145000 | 397000 | 61250 | 12530 | 1070 |
| 3 | IPDI | Caprolactam | 11,6 | 24,4 | 3,5 | 1120000 | 360000 | 59500 | 11500 | 980 |
| 4 | IPDI | Caprolactam | 11,8 | 24,5 | 4,6 | 660000 | 194000 | 34000 | 8550 | 680 |
| 5 | IPDI | Caprolactam | 11,85 | 24,6 | 6,4 | 451000 | 101000 | 22000 | 4500 | 450 |
| 6 | HDI | Caprolactam | 15,3 | 29,4 | 0,5 | 100 | 80 | 50 | 30 | <30 |
| 7 | DI51 | Caprolactam | 14,8 | 29,3 | 0,7 | 160 | 120 | 60 | 45 | <30 |

B Herstellung der blockierten Polyisocyanat-Harnstoff-Addukte

Allgemeine Herstellungsvorschrift

Zu einer 50 bis 70 %igen toluolischen Lösung eines partiell blockierten Polyisocyanats werden - bezogen auf den freien NCO-Gehalt - die äquivalenten Mengen einer 50 bis 70 %igen toluolischen Lösung eines Diamins oder Polyamins oder deren Gemische bei 55 bis 65 °C unter intensivem Rühren so zugegeben, daß die Reaktionstemperatur 70 °C nicht übersteigt. Nach beendeter Aminzugabe wird das Reaktionsgemisch noch 30 bis 45 Minuten weiter erhitzt. Während dieser Zeit wird die Temperatur auf 100 bis 120 °C langsam erhöht. Anschließend wird das Reaktionsprodukt im Vakuum bei 0,133 mbar vom Toluol befreit. In der folgenden Tabelle sind die chemischen und physikalischen Kenndaten der Reaktionsprodukte zusammengefaßt:

a) IPDI-Harnstoff-Addukte gemäß A2 und Aminkomponente

b) IPDI-Harnstoff-Addukte gemäß A1 und Aminkomponente

c) HDI-Harnstoff-Addukte gemäß A6 und Aminkomponente

d) DI51-Harnstoff-Addukte gemäß A7 und Aminkomponente

e) IPDI-Harnstoff-Addukte gemäß A3, A4, A5 und Aminkomponente

f) IPDI-Harnstoff-Addukte gemäß A2 im $NCO/NH_2$-Verhältnis von 1,05 bis 1,3 : 1 und Aminkomponente

g) IPDI-Harnstoff-Addukte gemäß A2 und Aminkomponente hergestellt in Spezialbenzin oder Cyclohexan

| Beispiel Ba | Amin-Komponente | NCO-Gehalt (Gew.-%) latent | frei | Schmelzbereich °C | Glasumwandlungstemperatur (DTA) °C |
|---|---|---|---|---|---|
| 1 | Dodecamethylendiamin-1.12 | 9,6 | 0,3 | 93- 96 | 32-56 |
| 2 | 3.3'-Dimethyl-4.4'-diamino-dicyclohexylmethan | 9,3 | 0 | 149-155 | 37-85 |
| 3 | 4.4'Diamino-dicyclohexyl-methan - fest | 9,9 | 0,25 | 148-150 | 39-58 |
| 4 | 4.4'-Diamino-dicyclohexyl-methan - flüssig | 10,0 | 0,3 | 146-149 | 40-57 |
| 5 | 4.4'-Diamino-diphenylmethan | 10,0 | 0,3 | 178-182 | 58-74 |
| 6 | Isophorondiamin (IPD) | 10,5 | 0,1 | 160-165 | 60-87 |
| 7 | 70 Gew.-T. IPD 30 Gew.-T. TMD* | 9,9 | 0 | 138-148 | 38-61 |
| 8 | Pentamethylenhexamin | 12,1 | 0,4 | 113-115 | 36-70 |
| 9 | Bis-(1.4-aminomethyl)-cyclohexan | 10,9 | 0,5 | 133-140 | 50-80 |
| **Beispiel Bb** | | | | | |
| 1 | 4.4'-Diaminodicyclohexyl-methan - flüssig | 10,2 | 0,1 | 144-147 | 41-59 |
| 2 | Bis-(1.4-aminomethyl)-cyclohexan | 10,8 | 0,3 | 136-141 | 53-75 |

* TMD = 2.2.4(2.4.4)-Trimethylhexamethylendiamin-1.6

EP 0 317 741 B1

| Beispiel | Amin-Komponente | NCO-Gehalt (Gew.-%) | | Schmelzbereich °C | Glasumwandlungstemperatur (DTA) °C |
|---|---|---|---|---|---|
| | | latent | frei | | |
| Beispiel Bc | | | | | |
| 1 | 4.4'-Diaminodicyclohexyl-methan - flüssig | 10,7 | 0 | 124-126 | 26-52 |
| Beispiel Bd | | | | | |
| 1 | 4.4'-Diaminodicyclohexyl-methan - flüssig | 10,6 | 0,1 | 105-111 | 24-52 |
| 2 | Bis-(1.4-aminomethyl)-cyclohexan | 11,3 | 0 | 100-104 | 29-60 |

Beispiel Be

Gemäß der allgemeinen Herstellungsvorschrift B wurden die partiell blockierten IPDI-Addukte gemäß A3, A4 und A5 mit 4.4'-Diaminodicyclohexylmethan zur Reaktion gebracht. In der folgenden Tabelle sind die chemischen und physikalischen Kenndaten dargestellt:

| Beispiel Be | IPDI-Add. gemäß | NCO-Gehalt in Gew.-% | | Schmelzbereich °C | Glasumwandlungs- temperatur (DTA) °C |
|---|---|---|---|---|---|
| | | latent | frei | | |
| 1 | A 3 | 10,3 | 0,3 | 148-150 | 38-72 |
| 2 | A 4 | 10,2 | 0,1 | 155-161 | 37-78 |
| 3 | A 5 | 10,25 | 0,2 | 155-157 | 40-95 |

Beispiel Bf

Gemäß der allgemeinen Herstellungsvorschrift B wurde partiell blokkiertes IPDI gemäß A 2 mit 4.4'-Diaminodicyclohexylmethan nicht im äquivalenten Verhältnis, sondern im NCO/Amin-Verhältnis = X : 1 umgesetzt. In der folgenden Tabelle sind die chemische und physikalischen Kenndaten zusammengefaßt:

| Beispiel Bf | X | NCO-Gehalt in Gew.-% | | Schmelzbereich °C | Glasumwandlungs- temperatur (DTA) °C |
|---|---|---|---|---|---|
| | | gesamt | frei | | |
| 1 | 1,05 | 9,9 | 0,4 | 145-148 | 35-58 |
| 2 | 1,1 | 10,7 | 0,8 | 140-142 | 33-59 |
| 3 | 1,2 | 11,5 | 1,4 | 138-140 | 35-58 |
| 4 | 1,3 | 12,0 | 1,95 | 131-136 | 33-55 |

Beispiel Bg

Zu 730 Gew.-T. partiell blockiertem IPDI gemäß Beispiel A 2, gelöst in 500 bis 550 Gew.-T. Spezialbenzin (enthält 3 Vol.-% Aromaten) oder Cyclohexan wird - bezogen auf den freien NCO-Gehalt - die berechnete Menge Aminkomponente bei Raumtemperatur unter heftigem Rühren so zugetropft, daß die Reaktionstemperatur 70 °C nicht übersteigt. Das Polyisocyanat-Harnstoff-Addukt fällt bereits während der Diaminzugabe aus. Nach beendeter Diaminzugabe wird noch 30 bis 45 Minuten weiter gerührt und anschließend, nach der titrimetrischen NCO-Bestimmung, vom Lösungsmittel befreit. Die folgende Tabelle gibt die chemischen und physikalischen Kenndaten wieder:

| NCO/Amin-Verhältnis = 1 : 1 | | | | | |
|---|---|---|---|---|---|
| Beispiel Bg | Aminkompo- nente | NCO-Gehalt in Gew.-% | | Schmelz- bereich | Glasumwandlungs- temperatur (DTA) |
| | | gesamt | frei | °C | °C |
| 1 | 4.4'-Diaminodi- cyclohexylmethan - flüssig | 9,5 | 0,4 | 146-149 | 36-63 |
| 2 | Bis-(1.4-aminome- thyl)-cyclohexan | 10,2 | 0,4 | 134-136 | 45-95 |
| 3 | Isophorondiamin | 10,0 | 0,4 | 154-159 | 56-84 |
| 4 | Pentaethylen- hexamin | 11,3 | 0 | 123-127 | 37-65 |
| NCO-Amin-Verhältnis 1,1;1,2;1,3 : 1 | | | | | |
| 5 | 4.4'-Diaminodi- cyclohexylmethan | 10,9 | 0,8 | 137-141 | 37-60 |
| 6 | " | 11,2 | 1,5 | 140-141 | 33-58 |
| 7 | " | 12,1 | 1,9 | 133-135 | 32-56 |

C Polyolkomponente

Allgemeine Herstellungsvorschrift

Die Ausgangskomponenten - Terephthalsäure (Ts), Dimethylterephthalat (DMT), Hexandiol-1,6 (HD), Neopentylglykol (NPG), 1,4-Dimethylolcyclohexan (DMC) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,05 Gew.-% Di-n-butylzinnoxid als Katalysator zugesetzt. Die erste Methanolabspaltung tritt bei einer Temperatur von ca. 170 °C auf. Innerhalb 6 bis 8 h wird die Temperatur auf 220 bis 230 °C erhöht und innerhalb weiterer 12 bis 15 h die Reaktion zu Ende geführt. Der Polyester wird auf 200 °C abgekühlt und durch Anlegen von Vakuum (1,33 mbar) innerhalb 30 bis 45 min weitgehend von flüchtigen Anteilen befreit. Während der gesamten Reaktionszeit wird das Sumpfprodukt gerührt und ein schwacher $N_2$-Strom durch das Reaktionsgemisch geleitet.

Folgende Tabelle gibt Polyesterzusammensetzungen und die entsprechenden physikalischen und chemischen Kenndaten wieder.

| Beispiel | Ausgangskomponenten | | | | | | chemische und physikalische Kenndaten | | | | |
|---|---|---|---|---|---|---|---|---|---|---|---|
| | Ts | DMT | HD | NPG | DMC | TMP | OH-Zahl | Säurezahl | Schmelzpunkt | DTA | Viskosität b. 160 °C in mPa·s |
| | Mol | Mol | Mol | Mol | Mol | Mol | mg KOH/g | mg KOH/g | °C | °C | |
| 1 | 10 | 10 | 6,25 | 10,5 | 2 | 2,9 | 55-60 | 3-4 | 75 | 50 | 25 000 |
| 2 | 10 | 10 | 5,75 | 10 | 3 | 2,9 | 58-63 | 3-4 | 79 | 50 | 28 000 |
| 3 | 11 | 11 | 9,75 | 11 | - | 2,9 | 50-55 | 3-4 | 76 | 50 | 22 000 |
| 4 | 6 | 9 | 3 | 7,5 | 3,25 | 2,9 | 80-81 | 2-4 | 80 | 50 | 12 000 |
| 5 | 12 | 12 | 6,75 | 11,5 | 5 | 3 | 58-63 | 3-5 | 80 | 50 | 19 000 |
| 6 | 8 | 7 | 5 | 10 | 2 | 1 | 35-40 | 3-4 | 80 | 50 | 40 000 |
| 7 | 8 | 9 | 5 | 8,5 | 4 | 1 | 38-43 | 3-4 | 70 | 48 | 19 000 |
| 8 | 9 | 9 | 3 | 13 | 3 | 1 | 50-56 | 3-4 | 70 | 50 | 10 000 |
| 9 | Polyester der Fa. Hoechst AG ALFTALAT AN 739 | | | | | | 55-60 | 2-3 | 70 | 50 | 28 000 |
| 10 | Polyester der Fa. UCB-Belgien CRYLCOAT 280 M | | | | | | 49-50 | 4-5 | 85 | 55 | 43 000 |
| 11 | Polyester der Fa. Bayer AG CERCLAN U 502 | | | | | | 45-55 | <10 | 76 | 50 | 23 000 |

* Glasumwandlungstemperatur

D Polyurethan-Pulverlacke

Allgemeine Herstellungsvorschrift

Die gemahlenen Produkte, Vernetzer, Polyester, Verlaufmittel - ggf. Katalysator-Masterbatch - werden gegebenenfalls mit dem Weißpigment und gegebenenfalls Füllstoffen, in einem Kollergang innig vermischt und anschließend im Extruder bei 90 bis 130 °C homogenisiert. Nach dem Erkalten wird das Extrudat gebrochen und mit einer Stiftmühle auf eine Korngröße < 100 μm gemahlen. Das so hergestellte Pulver wird mit einer elektrostatischen Pulverspritzanlage bei 60 kV auf entfettete, gegebenenfalls vorbehandelte Eisenbleche appliziert und in einem Umlufttrokkenschrank bei Temperaturen zwischen 160 und 200 °C eingebrannt.

Verlaufmittel-Masterbatch

Es werden 10 Gew.-% des Verlaufmittels - ein handelsübliches Copolymeres von Butylacrylat und 2-Ethylhexylacrylat - in dem entsprechenden Polyester in der Schmelze homogenisiert und nach dem Erstarren zerkleinert.

Katalysator-Masterbatch

Es werden 5 Gew.-% des Katalysators, hier Di-n-butylzinndilaurat in dem entsprechenden Polyester in der Schmelze homogenisiert und nach dem Erstarren zerkleinert.

Die Abkürzungen in den folgenden Tabellen bedeuten:

```
SD        = Schichtdicke in μm
HB        = Härte nach Buchholz (DIN 53 153)
ET        = Tiefung nach Erichsen in mm (DIN 53 156)
GS        = Gitterschnittprüfung (DIN 53 151)
GG 60 °⊀ = Messung des Glanzes nach Gardner (ASTM-D 523)
Imp. rev. = Impact reverse in g • m
```

Beispiel 1

Pigmentierter Lack

Nach dem beschriebenen Verfahren wurde der Pulverlack mit folgender Rezeptur hergestellt, appliziert und zwischen 160 und 200 °C eingebrannt.

358,4 Gew.-T. Polyester gemäß Beispiel C 1

191,6 Gew.-T. Vernetzer gemäß Ba 1

400,0 Gew.-T. Weißpigment (TiO$_2$)

50,0 Gew.-T. Verlaufmittel - Masterbatch

| Einbrenn-bedingungen | | Mechanische Kenndaten | | | | | |
|---|---|---|---|---|---|---|---|
| Zeit/Temp. | SD | HB | E T | GS | Imp. rev. | GG 60° ⚡ | |
| 8'/200 °C | 60-80 | 111 | ⁻10 | 0 | ⁻944,6 | 56 | |
| 10'/200 °C | 60-80 | 111 | ⁻10 | 0 | ⁻944,6 | 54 | |
| 15'/200 °C | 60-80 | 111 | ⁻10 | 0 | ⁻944,6 | 55 | |
| 15'/180 °C | ·70-80 | 111 | ⁻10 | 0 | ⁻944,6 | 55 | |
| 20'/180 °C | 80-90 | 111 | ⁻10 | 0 | ⁻944,6 | 55 | |
| 25'/180 °C | 70 | 111 | ⁻10 | 0 | ⁻944,6 | 56 | |
| 20'/170 °C | 60-70 | 111 | ⁻10 | 0 | 345,6 | 57 | |
| 25'/170 °C | 50-60 | 111 | 9,7-⁻10 | 0 | 576 | 56 | |
| 30'/160 °C | 50-60 | 111 | 7,2-9,1 | 0 | 230,4 | 58 | |
| 35'/160 °C | 50-60 | 111 | ⁻10 | 0 | 460,8 | 56 | |

Beispiel 2

Pigmentierter Lack

Nach dem beschriebenen Verfahren wurde der Pulverlack mit folgender Rezeptur hergestellt, appliziert und zwischen 160 und 200 ° C eingebrannt.

358,4 Gew.-T. Polyester gemäß Beispiel C 1

191,6 Gew.-T. Vernetzer gemäß Ba 1

300,0 Gew.-T. Weißpigment ($TiO_2$)

50,0 Gew.-T. Verlaufmittel - Masterbatch

100,0 Gew.-T. DURCAL 5$^R$ (Kreide der Firma Omya)

| Einbrenn-bedingungen | Mechanische Kenndaten | | | | | |
|---|---|---|---|---|---|---|
| Zeit/Temp. | SD | HB | ET | GS | Imp. rev. | GG 60° ⚡ |
| 8'/200 °C | 50-70 | 111 | 9,0-9,6 | 0 | 806,4 | 47 |
| 10'/200 °C | 60-80 | 100 | 9,7-10 | 0 | 806,4 | 48 |
| 15'/200 °C | 60-70 | 111 | ›10 | 0 | ›944,6 | 47 |
| 15'/180 °C | 70-80 | 100 | 9,4-9,6 | 0 | 691,2 | 49 |
| 20'/180 °C | 70-85 | 100 | 9,0-9,3 | 0 | 806,4 | 56 |
| 25'/180 °C | 60-75 | 111 | 10 | 0 | ›944,6 | 51 |
| 20'/170 °C | 60-70 | 111 | 10 | 0 | 345,6 | 51 |
| 25'/170 °C | 60-70 | 100 | 9,5-9,8 | 0 | 460,8 | 49 |
| 30'/160 °C | 50-60 | 111 | 7,0-8,1 | 0 | 115,2 | 52 |
| 35'/160 °C | 50-60 | 111 | 9,4-9,5 | 0 | 230,4 | 53 |

Beispiel 3

Pigmentierter Lack

Nach dem beschriebenen Verfahren wurde der Pulverlack mit folgender Rezeptur hergestellt, appliziert und zwischen 190 und 200 °C eingebrannt.

331,6 Gew.-T. Polyester gemäß Beispiel C 1

188,4 Gew.-T. Vernetzer gemäß Ba 1

300,0 Gew.-T. Weißpigment (TiO$_2$)

50,0 Gew.-T. Verlaufmittel - Masterbatch

30,0 Gew.-T. Katalysator-Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ⚡ |
| 15'/200 °C | 60 | 100 | 9,3-9,8 | 0 | ›944,6 | 35 |
| 20'/200 °C | 60-70 | 100 | 9,0-9,1 | 0 | ›944,6 | 34 |
| 25'/200 °C | 60-80 | 100 | 9,1-9,4 | 0 | ›944,6 | 34 |
| 20'/190 °C | 60-70 | 100 | 7,0-8,0 | 0 | ›944,6 | 37 |
| 25'/190 °C | 60 | 100 | 7,5-8,3 | 0 | ›944,6 | 35 |
| 30'/190 °C | 60-70 | 100 | 8,5-9,0 | 0 | ›944,6 | 36 |

Beispiel 4

Pigmentierter Lack

Nach dem beschriebenen Verfahren wurde der Pulverlack mit folgender Rezeptur hergestellt, appliziert und zwischen 190 und 200 ° C eingebrannt.

361,1 Gew.-T. Polyester gemäß Beispiel C 1

188,9 Gew.-T. Vernetzer gemäß Ba 2

400,0 Gew.-T. Weißpigment ($TiO_2$)

50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ⅌ |
| 15'/200 °C | 60 | 111 | 7,1-7,9 | 0 | 230,4 | 32 |
| 20'/200 °C | 70-80 | 125 | 6,6 | 0 | 576 | 34 |
| 25'/200 °C | 60-70 | 125 | 7,4-7,6 | 0 | 460,8 | 34 |
| 20'/190 °C | 60 | 111 | 4,0-4,5 | 0 | 115,2 | 36 |
| 25'/190 °C | 60-70 | 125 | 5,1-5,7 | 0 | 115,2 | 36 |
| 30'/190 °C | 60-70 | 111 | 5,8-6,0 | 0 | 230,4 | 37 |

Beispiel 5

Pigmentierter Lack

Nach dem beschriebenen Verfahren wurde der Pulverlack mit folgender Rezeptur hergestellt, appliziert und zwischen 190 und 200 °C eingebrannt.

372,8 Gew.-T. Polyester gemäß Beispiel C 1

177,2 Gew.-T. Vernetzer gemäß Ba 3

400,0 Gew.-T. Weißpigment $(TiO_2)$

50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 50-60 | 125 | 5,4-6,5 | 0 | 115,2 | 23 |
| 20'/200 °C | 60 | 125 | 7,4-7,5 | 0 | 230,4 | 25 |
| 25'/200 °C | 50 | 125 | 7,7 | 0 | 460,8 | 24 |
| 20'/190 °C | 50-60 | 125 | 4,0-4,3 | 0 | 115,2 | 26 |
| 25'/190 °C | 50-65 | 125 | 5,2-5,6 | 0 | 115,2 | 27 |
| 30'/190 °C | 60-70 | 125 | 5,4-5,7 | 0 | 230,4 | 25 |

Beispiel 6

Pigmentierter Lack

Nach dem beschriebenen Verfahren wurde der Pulverlack mit folgender Rezeptur hergestellt, appliziert und zwischen 190 und 200 ° C eingebrannt.

343,2 Gew.-T. Polyester gemäß Beispiel C 1

176,8 Gew.-T. Vernetzer gemäß Ba 3

300,0 Gew.-T. Weißpigment (TiO$_2$)

50,0 Gew.-T. Verlaufmittel - Masterbatch

30,0 Gew.-T. Katalysator-Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 50-60 | 111 | 5,3-5,7 | 0 | 115,2 | 20 |
| 20'/200 °C | 60-70 | 111 | 5,5-5,9 | 0 | 115,2 | 19 |
| 25'/200 °C | 60-70 | 125 | 6,0-6,5 | 0 | 345,6 | 20 |
| 20'/190 °C | 50-70 | 111 | 3,8-4,1 | 0 | 115,2 | 23 |
| 25'/190 °C | 50-60 | 111 | 4,4-4,7 | 0 | 230,4 | 25 |
| 30'/190 °C | 60-70 | 111 | 4,5-5,0 | 0 | 230,4 | 25 |

Beispiel 7

Pigmentierter Lack

Nach dem beschriebenen Verfahren wurde der Pulverlack mit folgender Rezeptur hergestellt, appliziert und zwischen 190 und 200 °C eingebrannt.

366,4 Gew.-T. Polyester gemäß Beispiel C 9

183,6 Gew.-T. Vernetzer gemäß Ba 3

400,0 Gew.-T. Weißpigment (TiO$_2$)

50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ✶ |
| 15'/200 °C | 40-50 | 125 | 4,4-5,7 | 0 | 115,2 | 41 |
| 20'/200 °C | 40-55 | 125 | 4,9-5,6 | 0 | 115,2 | 41 |
| 25'/200 °C | 40-50 | 125 | 5,6-6,5 | 0 | 345,6 | 42 |
| 20'/190 °C | 50 | 125 | 3,8-4,5 | 0 | 115,2 | 44 |
| 25'/190 °C | 45-55 | 125 | 4,5-4,9 | 0 | 115,2 | 46 |
| 30'/190 °C | 40-50 | 125 | 4,6-5,1 | 0 | 230,4 | 46 |

Beispiel 8

Klarlack

Nach dem beschriebenen Verfahren wurde der Pulverlack mit folgender Rezeptur hergestellt, appliziert und zwischen 190 und 200 °C eingebrannt.

638,4 Gew.-T. Polyester gemäß Beispiel C 1

311,6 Gew.-T. Vernetzer gemäß Ba 4

50,0 Gew.-T. Verlaufmittel - Masterbatch

| Einbrenn-bedingungen | | Mechanische Kenndaten | | | | |
|---|---|---|---|---|---|---|
| Zeit/Temp. | SD | ET | GS | Imp. rev. | GG 60° ✝ | |
| 15'/200 °C | 50-60 | 8,2-8,9 | 0 | ⁾944,6 | matte | |
| 20'/200 °C | 40-50 | ⁾10 | 0 | ⁾944,6 | Ober- | |
| 25'/200 °C | 50-60 | ⁾10 | 0 | ⁾944,6 | fläche | |
| 20'/190 °C | 50-60 | 7,5-8,3 | 0 | 691 | " | |
| 25'/190 °C | 40-60 | 8,6-9,0 | 0 | 806,4 | " | |
| 30'/190 °C | 50-60 | 9,2-9,9 | 0 | ⁾944,6 | " | |

Beispiel 9

Pigmentierter Lack

Nach dem beschriebenen Verfahren wurde der Pulverlack mit folgender Rezeptur hergestellt, appliziert und zwischen 190 und 200 °C eingebrannt.

374,0 Gew.-T. Polyester gemäß Beispiel C 1

176,0 Gew.-T. Vernetzer gemäß Ba 4

400,0 Gew.-T. Weißpigment (TiO$_2$)

50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ∡ |
| 15'/200 °C | 60-70 | 100 | 6,5-6,7 | 0 | 576 | 25 |
| 20'/200 °C | 50-65 | 100 | 7,1-7,3 | 0 | 806,4 | 27 |
| 25'/200 °C | 60-70 | 100 | 6,9-7,5 | 0 | 691,2 | 26 |
| 20'/190 °C | 60 | 100 | 3,5-4,6 | 0 | 345,6 | 27 |
| 25'/190 °C | 55-65 | 111 | 4,7-4,9 | 0 | 230,4 | 27 |
| 30'/190 °C | 60-70 | 100 | 5,5-5,9 | 0 | 345,6 | 28 |

Beispiel 10

Pigmentierter Lack

Nach dem beschriebenen Verfahren wurde der Pulverlack mit folgender Rezeptur hergestellt, appliziert und zwischen 190 und 200 °C eingebrannt.

343,3 Gew.-T. Polyester gemäß Beispiel C 1

176,7 Gew.-T. Vernetzer gemäß Ba 4*

300,0 Gew.-T. Weißpigment ($TiO_2$)

50,0 Gew.-T. Verlaufmittel - Masterbatch

30,0 Gew.-T. Katalysator-Masterbatch

100,0 Gew.-T. DURCAL 5

\* Die Lack-Kenndaten sind beim Einsatz des Vernetzers Bb 1 innerhalb der Fehlergrenzen identisch.

| Einbrenn-bedingungen | Mechanische Kenndaten | | | | | |
|---|---|---|---|---|---|---|
| Zeit/Temp. | SD | HB | ET | GS | Imp. rev. | GG 60° ⚡ |
| 15'/200 °C | 50-60 | 100 | 7,0-7,2 | 0 | 806,4 | 19 |
| 20'/200 °C | 50-60 | 111 | 6,8-7,0 | 0 | 806,4 | 20 |
| 25'/200 °C | 50-60 | 100 | 6,9-7,0 | 0 | 806,4 | 22 |
| 20'/190 °C | 60-70 | 100 | 3,6-4,6 | 0 | 115,2 | 25 |
| 25'/190 °C | 60-75 | 100 | 4,2-4,7 | 0 | 230,4 | 26 |
| 30'/190 °C | 50-60 | 100 | 5,5-6,3 | 0 | 230,4 | 24 |

Beispiel 11

Pigmentierter Lack

Nach dem beschriebenen Verfahren wurde der Pulverlack mit folgender Rezeptur hergestellt, appliziert und zwischen 190 und 200 °C eingebrannt.

340,7 Gew.-T. Polyester gemäß Beispiel C 1

179,3 Gew.-T. Vernetzer gemäß Ba 4

200,0 Gew.-T. Weißpigment $(TiO_2)$

50,0 Gew.-T. Verlaufmittel - Masterbatch

30,0 Gew.-T. Katalysator-Masterbatch

200,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ⚡ |
| 15'/200 °C | 50-60 | 100 | 5,9-7,2 | 0 | 691,2 | 19 |
| 20'/200 °C | 60 | 100 | 6,4 | 0 | 576 | 21 |
| 25'/200 °C | 50-60 | 100 | 6,9-7,0 | 0 | 576 | 21 |
| 20'/190 °C | 50-60 | 100 | 4,4-5,1 | 0 | 115,2 | 24 |
| 25'/190 °C | 55-65 | 100 | 4,8-5,5 | 0 | 115,2 | 23 |
| 30'/190 °C | 50-60 | 100 | 5,7-5,9 | 0 | 345,6 | 25 |

Beispiel 12

Pigmentierter Lack

Nach dem beschriebenen Verfahren wurde der Pulverlack mit folgender Rezeptur hergestellt, appliziert und zwischen 190 und 200 °C eingebrannt.

480,4 Gew.-T. Polyester gemäß Beispiel C 1

239,6 Gew.-T. Vernetzer gemäß Ba 4

200,0 Gew.-T. Weißpigment $(TiO_2)$

50,0 Gew.-T. Verlaufmittel - Masterbatch

30,0 Gew.-T. Katalysator-Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 60 | 111 | 5,0-6,0 | 0 | 230,4 | 20 |
| 20'/200 °C | 60 | 111 | 7,1-7,2 | 0 | 345,6 | 22 |
| 25'/200 °C | 70-80 | 111 | 7,5-7,7 | 0 | 345,6 | 22 |
| 20'/190 °C | 60-70 | 111 | 3,5-4,3 | 0 | 115,2 | 24 |
| 25'/190 °C | 60 | 111 | 4,4-4,9 | 0 | 115,2 | 25 |
| 30'/190 °C | 60-75 | 111 | 5,2-5,7 | 0 | 115,2 | 25 |

Beispiel 13

Pigmentierter Lack

Nach dem beschriebenen Verfahren wurde der Pulverlack mit folgender Rezeptur hergestellt, appliziert und zwischen 190 und 200 °C eingebrannt.

480,4 Gew.-T. Polyester gemäß Beispiel C 1

239,6 Gew.-T. Vernetzer gemäß Ba 4

100,0 Gew.-T. Weißpigment ($TiO_2$)

50,0 Gew.-T. Verlaufmittel - Masterbatch

30,0 Gew.-T. Katalysator-Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 40-60 | 111 | 4,9-5,1 | 0 | 115,2 | 16 |
| 20'/200 °C | 50-60 | 111 | 5,3-5,7 | 0 | 230,4 | 16 |
| 25'/200 °C | 50-65 | 111 | 6,0-6,5 | 0 | 230,4 | 17 |
| 20'/190 °C | 55-65 | 111 | 4,1-4,3 | 0 | 115,2 | 19 |
| 25'/190 °C | 40-55 | 111 | 4,9-5,2 | 0 | 230,4 | 22 |
| 30'/190 °C | 50-60 | 111 | 5,7-5,9 | 0 | 115,2 | 22 |

Beispiel 14

Pigmentierter Lack

Nach dem beschriebenen Verfahren wurde der Pulverlack mit folgender Rezeptur hergestellt, appliziert und zwischen 190 und 200 ° C eingebrannt.

340,7 Gew.-T. Polyester gemäß Beispiel C 1

179,3 Gew.-T. Vernetzer gemäß Ba 4

390,0 Gew.-T. DURCAL 5

50,0 Gew.-T. Verlaufmittel - Masterbatch

30,0 Gew.-T. Katalysator-Masterbatch

10,0 Gew.-T. PRINTEX U[R] (Ruß der Firma Degussa)

| Einbrenn-bedingungen | Mechanische Kenndaten | | | | | |
|---|---|---|---|---|---|---|
| Zeit/Temp. | SD | HB | ET | GS | Imp. rev. | GG 60° ✷ |
| 15'/200 °C | 40-50 | 100 | 4,5-4,9 | 0 | 115,2 | 21 |
| 20'/200 °C | 40-55 | 111 | 5,1-5,5 | 0 | 230,4 | 22 |
| 25'/200 °C | 50-60 | 100 | 5,7-6,2 | 0 | 230,4 | 21 |
| 20'/190 °C | 50-60 | 100 | 3,5-4,1 | 0 | 115,2 | 24 |
| 25'/190 °C | 40-50 | 111 | 4,5-4,8 | 0 | 115,2 | 23 |
| 30'/190 °C | 40-50 | 111 | 5,0-5,3 | 0 | 115,2 | 25 |

Beispiel 15

Pigmentierter Lack

Nach dem beschriebenen Verfahren wurde der Pulverlack mit folgender Rezeptur hergestellt, appliziert und zwischen 190 und 200 °C eingebrannt.

28

361,4 Gew.-T. Polyester gemäß Beispiel C 2

188,6 Gew.-T. Vernetzer gemäß Ba 4

400,0 Gew.-T. Weißpigment (TiO$_2$)

50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ✶ |
| 15'/200 °C | 50-60 | 100 | 5,6-6,0 | 0 | 230,4 | 28 |
| 20'/200 °C | 50-60 | 100 | 5,7-6,3 | 0 | 115,2 | 25 |
| 25'/200 °C | 60-70 | 111 | 6,5-7,0 | 0 | 345,6 | 27 |
| 20'/190 °C | 60-70 | 111 | 3,1-3,7 | 0 | 115,2 | 30 |
| 25'/190 °C | 50-70 | 100 | 3,7-4,0 | 0 | 115,2 | 30 |
| 30'/190 °C | 50-60 | 100 | 4,5-4,6 | 0 | 115,2 | 31 |

Beispiel 16

Pigmentierter Lack

Nach dem beschriebenen Verfahren wurde der Pulverlack mit folgender Rezeptur hergestellt, appliziert und zwischen 190 und 200 °C eingebrannt.

361,4 Gew.-T. Polyester gemäß Beispiel C 2

188,6 Gew.-T. Vernetzer gemäß Ba 4

300,0 Gew.-T. Weißpigment (TiO$_2$)

 50,0 Gew.-T. Verlaufmittel - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 55-60 | 100 | 5,3-5,6 | 0 | 115,2 | 21 |
| 20'/200 °C | 50-60 | 100 | 5,8-6,2 | 0 | 230,4 | 23 |
| 25'/200 °C | 60-70 | 100 | 5,8-6,5 | 0 | 230,4 | 23 |
| 20'/190 °C | 50-60 | 100 | 2,9-3,3 | 0 | 115,2 | 26 |
| 25'/190 °C | 50-60 | 111 | 3,0-3,7 | 0 | 115,2 | 27 |
| 30'/190 °C | 45-65 | 100 | 4,0-4,1 | 0 | 115,2 | 26 |

Beispiel 17

Pigmentierter Lack

Nach dem beschriebenen Verfahren wurde der Pulverlack mit folgender Rezeptur hergestellt, appliziert und zwischen 190 und 200 °C eingebrannt.

380,6 Gew.-T. Polyester gemäß Beispiel C 3

169,4 Gew.-T. Vernetzer gemäß Ba 4

400,0 Gew.-T. Weißpigment (TiO$_2$)

50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ⊁ |
| 15'/200 °C | 60-70 | 111 | 4,2-4,6 | 0 | 115,2 | 30 |
| 20'/200 °C | 50-70 | 100 | 5,2-7,2 | 0 | 345,6 | 31 |
| 25'/200 °C | 60-75 | 111 | 5,7-7,0 | 0 | 345,6 | 30 |
| 20'/190 °C | 60-75 | 111 | 3,1-3,5 | 0 | 115,2 | 36 |
| 25'/190 °C | 60-70 | 111 | 3,7-4,2 | 0 | 115,2 | 35 |
| 30'/190 °C | 60 | 125 | 4,7-5,1 | 0 | 230,4 | 37 |

Beispiel 18

Pigmentierter Lack

Nach dem beschriebenen Verfahren wurde der Pulverlack mit folgender Rezeptur hergestellt, appliziert und zwischen 190 und 200 °C eingebrannt.

```
351,0 Gew.-T. Polyester gemäß Beispiel C 3
169,0 Gew.-T. Vernetzer gemäß Ba 4
300,0 Gew.-T. Weißpigment (TiO₂)
 50,0 Gew.-T. Verlaufmittel - Masterbatch
 30,0 Gew.-T. Katalysator - Masterbatch
100,0 Gew.-T. DURCAL 5
```

| Einbrenn-bedingungen | Mechanische Kenndaten | | | | | |
|---|---|---|---|---|---|---|
| Zeit/Temp. | SD | HB | ET | GS | Imp. rev. | GG 60° ≮ |
| 15'/200 °C | 50-60 | 111 | 6,5-7,0 | 0 | 115,2 | 21 |
| 20'/200 °C | 60-70 | 100 | 5,7-6,4 | 0 | 230,4 | 21 |
| 25'/200 °C | 80 | 100 | 5,6-6,7 | 0 | 345,6 | 20 |
| 20'/190 °C | 60-70 | 111 | 2,9-3,8 | 0 | ‹115,2 | 26 |
| 25'/190 °C | 60-70 | 100 | 3,0-3,7 | 0 | 115,2 | 24 |
| 30'/190 °C | 60-70 | 111 | 4,3-4,8 | 0 | 115,2 | 25 |

Beispiel 19

Pigmentierter Lack

Nach dem beschriebenen Verfahren wurde der Pulverlack mit folgender Rezeptur hergestellt, appliziert und zwischen 190 und 200 °C eingebrannt.

284,5 Gew.-T. Polyester gemäß Beispiel C 4

235,5 Gew.-T. Vernetzer gemäß Ba 4

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 40-50 | 100 | 4,8-5,0 | 0 | 230,4 | 34 |
| 20'/200 °C | 60 | 100 | 4,9-5,5 | 0 | 230,4 | 36 |
| 25'/200 °C | 60 | 100 | 5,0-5,5 | 0 | 345,6 | 35 |
| 20'/190 °C | 40-55 | 111 | 2,3-3,1 | 0 | 115,2 | 38 |
| 25'/190 °C | 40-60 | 100 | 3,4-4,0 | 0 | 115,2 | 40 |
| 30'/190 °C | 50 | 111 | 4,0-4,2 | 0 | 115,2 | 39 |

Beispiel 20

Pigmentierter Lack

Nach dem beschriebenen Verfahren wurde der Pulverlack mit folgender Rezeptur hergestellt, appliziert und zwischen 190 und 200 °C eingebrannt.

324,8 Gew.-T. Polyester gemäß Beispiel C 5

195,2 Gew.-T. Vernetzer gemäß Ba 4

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 70-80 | 100 | 5,9-6,2 | 0 | 345,6 | 46 |
| 20'/200 °C | 80-90 | 100 | 6,0-6,3 | 0 | 345,6 | 45 |
| 25'/200 °C | 60-70 | 100 | 6,9-7,5 | 0 | 576 | 45 |
| 25'/190 °C | 70-80 | 100 | 2,9-4,0 | 0 | <115,2 | 48 |
| 30'/190 °C | 60-70 | 100 | 5,0-5,2 | 0 | 230,4 | 50 |

Beispiel 21

Pigmentierter Lack

Nach dem beschriebenen Verfahren wurde der Pulverlack mit folgender Rezeptur hergestellt, appliziert und zwischen 190 und 200 °C eingebrannt.

EP 0 317 741 B1

382,3 Gew.-T. Polyester gemäß Beispiel C 6

137,7 Gew.-T. Vernetzer gemäß Ba 4

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ≠ |
| 15'/200 °C | 70-80 | 125 | 7,2-7,3 | 0 | 115,2 | 40 |
| 20'/200 °C | 70-80 | 100 | 6,4-7,2 | 0 | 230,4 | 41 |
| 25'/200 °C | 30-90 | 111 | 7,5-8,4 | 0 | 460,8 | 43 |
| 20'/190 °C | 70-80 | 111 | 4,6-5,3 | 0 | 115,2 | 47 |
| 25'/190 °C | 80-90 | 111 | 5,2-5,6 | 0 | 115,2 | 46 |
| 30'/190 °C | 60-80 | 125 | 6,2-6,6 | 0 | 230,4 | 48 |

Beispiel 22

Pigmentierter Lack

Nach dem beschriebenen Verfahren wurde der Pulverlack mit folgender Rezeptur hergestellt, appliziert und zwischen 190 und 200 °C eingebrannt.

35

380,2 Gew.-T. Polyester gemäß Beispiel C 7

139,8 Gew.-T. Vernetzer gemäß Ba 4

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ⅀ |
| 15'/200 °C | 60-80 | 111 | 7,0-8,0 | 0 | 806,4 | 41 |
| 20'/200 °C | 80 | 111 | 7,5-8,3 | 0 | 691,2 | 38 |
| 25'/200 °C | 50-60 | 111 | 8,3-8,6 | 0 | 806,4 | 41 |
| 20'/190 °C | 80 | 111 | 6,0 | 0 | 115,2 | 47 |
| 25'/190 °C | 70-80 | 111 | 5,8-6,3 | 0 | 230,4 | 46 |
| 30'/190 °C | 70-80 | 111 | 6,2-6,7 | 0 | 345,6 | 45 |

Beispiel 23

Pigmentierter Lack

Nach dem beschriebenen Verfahren wurde der Pulverlack mit folgender Rezeptur hergestellt, appliziert und zwischen 190 und 200 °C eingebrannt.

EP 0 317 741 B1

338,4 Gew.-T. Polyester gemäß Beispiel C 8

181,6 Gew.-T. Vernetzer gemäß Ba 4

300,0 Gew.-T. Weißpigment ($TiO_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 50-60 | 125 | 4,2-4,7 | 0 | 115,2 | 46 |
| 20'/200 °C | 60-80 | 111 | 4,8-5,2 | 0 | 115,2 | 46 |
| 25'/200 °C | 60 | 125 | 6,2-6,4 | 0 | 230,4 | 48 |
| 20'/190 °C | 60 | 125 | 3,0-4,5 | 0 | ‹115,2 | 50 |
| 25'/190 °C | 60-70 | 125 | 4,0-4,2 | 0 | 115,2 | 52 |
| 30'/190 °C | 70-80 | 125 | 4,6-4,8 | 0 | 115,2 | 49 |

Beispiel 24

Pigmentierter Lack

Nach dem beschriebenen Verfahren wurde der Pulverlack mit folgender Rezeptur hergestellt, appliziert und zwischen 190 und 200 °C eingebrannt.

EP 0 317 741 B1

362,3 Gew.-T. Polyester gemäß Beispiel C 9

187,7 Gew.-T. Vernetzer gemäß Ba 4

400,0 Gew.-T. Weißpigment (TiO$_2$)

50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 50-60 | 111 | 3,6-4,1 | 0 | ‹115,2 | 48 |
| 20'/200 °C | 60-70 | 111 | 3,9-4,7 | 0 | 230,4 | 50 |
| 25'/200 °C | 50-75 | 125 | 4,0-4,8 | 0 | 115,2 | 50 |
| 25'/190 °C | 60-70 | 111 | 2,7-3,0 | 0 | ‹115,2 | 53 |
| 30'/190 °C | 50-60 | 111 | 2,9-3,3 | 0 | ‹115,2 | 56 |

Beispiel 25

Pigmentierter Lack

Nach dem beschriebenen Verfahren wurde der Pulverlack mit folgender Rezeptur hergestellt, appliziert und zwischen 190 und 200 °C eingebrannt.

38

362,3 Gew.-T. Polyester gemäß Beispiel C 9

187,7 Gew.-T. Vernetzer gemäß Ba 4

300,0 Gew.-T. Weißpigment (TiO$_2$)

50,0 Gew.-T. Verlaufmittel - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ⚹ |
| 15'/200 °C | 50-60 | 111 | 3,0-3,6 | 0 | ‹115,2 | 42 |
| 20'/200 °C | 40-60 | 111 | 3,7-4,0 | 0 | 230,4 | 44 |
| 25'/200 °C | 50-65 | 125 | 4,2-4,5 | 0 | 230,4 | 42 |
| 25'/190 °C | 50-60 | 111 | 2,5-3,0 | 0 | ‹115,2 | 46 |
| 30'/190 °C | 50-65 | 125 | 2,7-3,1 | 0 | ‹115,2 | 47 |

Beispiel 26

Pigmentierter Lack

Nach dem beschriebenen Verfahren wurde der Pulverlack mit folgender Rezeptur hergestellt, appliziert und zwischen 190 und 200 °C eingebrannt.

331,3 Gew.-T. Polyester gemäß Beispiel C 9

188,7 Gew.-T. Vernetzer gemäß Ba 4

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ✻ |
| 15'/200 °C | 50-60 | 100 | 3,7-4,1 | 0 | ⁼115,2 | 43 |
| 20'/200 °C | 60-70 | 100 | 3,9-4,5 | 0 | 115,2 | 40 |
| 25'/200 °C | 60-70 | 100 | 4,5-4,7 | 0 | 115,2 | 44 |
| 25'/190 °C | 60-70 | 111 | 3,0-3,3 | 0 | ⁼115,2 | 48 |
| 30'/190 °C | 60-80 | 111 | 3,6-3,9 | 0 | ⁼115,2 | 46 |

Beispiel 27

Pigmentierter Lack

Nach dem beschriebenen Verfahren wurde der Pulverlack mit folgender Rezeptur hergestellt, appliziert und bei 200 °C eingebrannt.

346,2 Gew.-T. Polyester gemäß Beispiel C 10

173,8 Gew.-T. Vernetzer gemäß Ba 4

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 60-70 | 111 | 5,8-6,1 | 0 | 345,6 | 33 |
| 20'/200 °C | 80 | 125 | 5,1-5,7 | 0 | 230,4 | 36 |
| 25'/200 °C | 60 | 125 | 5,6-6,3 | 0 | 345,6 | 33 |

Beispiel 28

Pigmentierter Lack

Nach dem beschriebenen Verfahren wurde der Pulverlack mit folgender Rezeptur hergestellt, appliziert und bei 200 °C eingebrannt.

366,1 Gew.-T. Polyester gemäß Beispiel C 11

153,9 Gew.-T. Vernetzer gemäß Ba 4

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 60-80 | 100 | 4,4-5,9 | 0 | 230,4 | 35 |
| 20'/200 °C | 70-90 | 100 | 4,8-6,0 | 0 | 345,6 | 36 |
| 25'/200 °C | 80-90 | 100 | 4,7-5,7 | 0 | 345,6 | 34 |

41

Beispiel 29

Pigmentierter Lack

Nach dem beschriebenen Verfahren wurde der Pulverlack mit folgender Rezeptur hergestellt, appliziert und zwischen 190 und 200 °C eingebrannt.

```
370,3 Gew.-T. Polyester gemäß Beispiel C 1
179,7 Gew.-T. Vernetzer gemäß Ba 5
400,0 Gew.-T. Weißpigment (TiO₂)
 50,0 Gew.-T. Verlaufmittel - Masterbatch
```

| Einbrenn-bedingungen | Mechanische Kenndaten | | | | | |
|---|---|---|---|---|---|---|
| Zeit/Temp. | SD | HB | ET | GS | Imp. rev. | GG 60° ☆ |
| 15'/200 °C | 40-50 | 125 | 4,8-6,6 | 0 | 115,2 | 23 |
| 20'/200 °C | 50-65 | 125 | 4,7-5,9 | 0 | 115,2 | 23 |
| 25'/200 °C | 40-50 | 125 | 6,7-6,9 | 0 | 230,4 | 23 |
| 20'/190 °C | 40-55 | 111 | 3,7-4,1 | 0 | ‹115,2 | 26 |
| 25'/190 °C | 50-60 | 125 | 4,1-4,5 | 0 | 115,2 | 25 |
| 30'/190 °C | 40-50 | 111 | 4,2-4,7 | 0 | 115,2 | 24 |

Beispiel 30

Pigmentierter Lack

Nach dem beschriebenen Verfahren wurde der Pulverlack mit folgender Rezeptur hergestellt, appliziert und zwischen 190 und 200 °C eingebrannt.

321,7 Gew.-T. Polyester gemäß Beispiel C 1

198,3 Gew.-T. Vernetzer gemäß Ba 5

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ✱ |
| 15'/200 °C | 50-60 | 111 | 7,8-8,2 | 0 | 806,4 | 28 |
| 20'/200 °C | 50-60 | 111 | 7,4-7,8 | 0 | 806,4 | 31 |
| 25'/200 °C | 50-60 | 125 | 8,1-8,2 | 0 | 806,4 | 30 |
| 20'/190 °C | 60 | 125 | 4,2-4,5 | 0 | 115,2 | 34 |
| 25'/190 °C | 60-70 | 111 | 5,0-5,7 | 0 | 230,4 | 35 |
| 30'/190 °C | 60 | 100 | 7,0-7,2 | 0 | − 230,4 | 33 |

Beispiel 31

Pigmentierter Lack

Nach dem beschriebenen Verfahren wurde der Pulverlack mit folgender Rezeptur hergestellt, appliziert und zwischen 190 und 200 °C eingebrannt.

264,3 Gew.-T. Polyester gemäß Beispiel C 1

120,7 Gew.-T. Vernetzer gemäß Ba 6

400,0 Gew.-T. Weißpigment (TiO$_2$)

  50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ⭐ |
| 15'/200 °C | 40-60 | 111 | 4,5-5,1 | 0 | 115,2 | 36 |
| 20'/200 °C | 60 | 111 | 5,0-5,5 | 0 | 230,4 | 36 |
| 25'/200 °C | 40-60 | 111 | 5,7-6,2 | 0 | 345,6 | 38 |
| 20'/190 °C | 60 | 111 | 3,3-3,6 | 0 | 115,2 | 36 |
| 25'/190 °C | 40-60 | 111 | 3,7-4,0 | 0 | 115,2 | 38 |
| 30'/190 °C | 40-60 | 111 | 4,2-4,5 | 0 | 230,4 | 38 |

Beispiel 32

Pigmentierter Lack

Nach dem beschriebenen Verfahren wurde der Pulverlack mit folgender Rezeptur hergestellt, appliziert und zwischen 190 und 200 °C eingebrannt.

348,0 Gew.-T. Polyester gemäß Beispiel C 1

172,0 Gew.-T. Vernetzer gemäß Ba 6

400,0 Gew.-T. Weißpigment (TiO$_2$)

50,0 Gew.-T. Verlaufmittel - Masterbatch

30,0 Gew.-T. Katalysator - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ∢ |
| 15'/200 °C | 40-50 | 125 | 4,6-5,7 | 0 | 115,2 | 30 |
| 20'/200 °C | 40-50 | 125 | 5,1-5,7 | 0 | 230,4 | 29 |
| 25'/200 °C | 50 | 125 | 6,0-6,1 | 0 | 345,6 | 30 |
| 20'/190 °C | 50-55 | 100 | 3,7-4,0 | 0 | 115,2 | 31 |
| 25'/190 °C | 40-50 | 111 | 3,9-4,3 | 0 | 115,2 | 31 |
| 30'/190 °C | 40-50 | 125 | 4,4-4,9 | 0 | 230,4 | 30 |

Beispiel 33

Pigmentierter Lack

Nach dem beschriebenen Verfahren wurde der Pulverlack mit folgender Rezeptur hergestellt, appliziert und zwischen 190 und 200 °C eingebrannt.

243,6 Gew.-T. Polyester gemäß Beispiel C 1

121,4 Gew.-T. Vernetzer gemäß Ba 6

210,0 Gew.-T. Weißpigment ($TiO_2$)

35,0 Gew.-T. Verlaufmittel - Masterbatch

21,0 Gew.-T. Katalysator - Masterbatch

70,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ≮ |
| 15'/200 °C | 40-60 | 111 | 5,1-5,5 | 0 | 115,2 | 34 |
| 20'/200 °C | 40 | 111 | 5,4-5,5 | 0 | 345,6 | 35 |
| 25'/200 °C | 60 | 111 | 5,5-6,0 | 0 | 230,4 | 37 |
| 20'/190 °C | 55-60 | 100 | 3,5-3,6 | 0 | ‹115,2 | 32 |
| 25'/190 °C | 50-60 | 111 | 3,7-4,0 | 0 | 115,2 | 35 |
| 30'/190 °C | 50-60 | 100 | 3,9-4,4 | 0 | 115,2 | 32 |

Beispiel 34

Pigmentierter Lack

Nach dem beschriebenen Verfahren wurde der Pulverlack mit folgender Rezeptur hergestellt, appliziert und zwischen 190 und 200 °C eingebrannt.

342,1 Gew.-T. Polyester gemäß Beispiel C 9

177,9 Gew.-T. Vernetzer gemäß Ba 6

400,0 Gew.-T. Weißpigment $(TiO_2)$

50,0 Gew.-T. Verlaufmittel - Masterbatch

30,0 Gew.-T. Katalysator - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 60 | 111 | 4,0-4,8 | 0 | 115,2 | 55 |
| 20'/200 °C | 60-65 | 111 | 4,2-5,1 | 0 | 115,2 | 56 |
| 25'/200 °C | 55-65 | 125 | 5,3-5,7 | 0 | 230,4 | 55 |
| 20'/190 °C | 55-60 | 111 | 3,0-3,5 | 0 | 115,2 | 56 |
| 25'/190 °C | 50-60 | 125 | 3,3-3,9 | 0 | 115,2 | 52 |
| 30'/190 °C | 50-60 | 125 | 3,9-4,1 | 0 | 230,4 | 54 |

Beispiel 35

Pigmentierter Lack

Nach dem beschriebenen Verfahren wurde der Pulverlack mit folgender Rezeptur hergestellt, appliziert und zwischen 190 und 200 °C eingebrannt.

369,0 Gew.-T. Polyester gemäß Beispiel C 1

181,0 Gew.-T. Vernetzer gemäß Ba 7

400,0 Gew.-T. Weißpigment (TiO$_2$)

 50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ✹ |
| 15'/200 °C | 40-50 | 100 | 4,8-6,0 | 0 | 345,6 | 55 |
| 20'/200 °C | 40-50 | 111 | 7,0 | 0 | 576 | 55 |
| 25'/200 °C | 40-50 | 100 | 6,6-7,8 | 0 | 576 | 52 |
| 20'/190 °C | 40-50 | 111 | 5,2-5,8 | 0 | 345,6 | 57 |
| 25'/190 °C | 40-55 | 111 | 5,0-6,0 | 0 | 460,8 | 58 |
| 30'/190 °C | 40-50 | 100 | 5,3-6,2 | 0 | 576 | 56 |

Beispiel 36

Pigmentierter Lack

Nach dem beschriebenen Verfahren wurde der Pulverlack mit folgender Rezeptur hergestellt, appliziert und zwischen 190 und 200 °C eingebrannt.

393,3 Gew.-T. Polyester gemäß Beispiel C 1

156,7 Gew.-T. Vernetzer gemäß Ba 8

400,0 Gew.-T. Weißpigment (TiO$_2$)

50,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 50-60 | 100 | 5,1-5,9 | 0 | 576 | 56 |
| 20'/200 °C | 60 | 100 | 5,1-6,0 | 0 | 576 | 59 |
| 25'/200 °C | 40-50 | 100 | 7,0-8,0 | 0 | 691,2 | 56 |
| 20'/190 °C | 50-60 | 100 | 4,5-4,9 | 0 | 345,6 | 57 |
| 25'/190 °C | 50-60 | 100 | 5,3-5,5 | 0 | 576 | 59 |
| 30'/190 °C | 60 | 100 | 5,9-6,2 | 0 | 460,8 | 59 |

Beispiel 37

Pigmentierter Lack

Nach dem beschriebenen Verfahren wurde der Pulverlack mit folgender Rezeptur hergestellt, appliziert und zwischen 190 und 200 °C eingebrannt.

363,7 Gew.-T. Polyester gemäß Beispiel C 1

156,3 Gew.-T. Vernetzer gemäß Ba 8

300,0 Gew.-T. Weißpigment ($TiO_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ✳ |
| 15'/200 °C | 50-65 | 100 | 4,8-5,0 | 0 | 230,4 | 51 |
| 20'/200 °C | 60-70 | 100 | 5,2-5,7 | 0 | 345,6 | 50 |
| 25'/200 °C | 50-60 | 100 | 5,7-6,5 | 0 | 460,8 | 51 |
| 20'/190 °C | 60-70 | 100 | 3,9-4,5 | 0 | 115,2 | 53 |
| 25'/190 °C | 55-65 | 100 | 4,5-4,7 | 0 | 230,4 | 55 |
| 30'/190 °C | 60-70 | 100 | 4,4-4,9 | 0 | 230,4 | 55 |

Beispiel 38

Pigmentierter Lack

Nach dem beschriebenen Verfahren wurde der Pulverlack mit folgender Rezeptur hergestellt, appliziert und zwischen 190 und 200 °C eingebrannt.

341,3 Gew.-T. Polyester gemäß Reispiel C 1

153,7 Gew.-T. Vernetzer gemäß Ba 9

360,0 Gew.-T. Weißpigment ($TiO_2$)

45,0 Gew.-T. Verlaufmittel - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 40-50 | 100 | 5,4-6,3 | 0 | 115,2 | 27 |
| 20'/200 °C | 40-50 | 100 | 5,9-6,5 | 0 | 230,4 | 27 |
| 25'/200 °C | 50-60 | 111 | 6,2-7,5 | 0 | 460,8 | 26 |
| 20'/190 °C | 40-50 | 111 | 4,0-4,5 | 0 | 115,2 | 31 |
| 25'/190 °C | 50-60 | 111 | 4,9-5,3 | 0 | 345,6 | 33 |
| 30'/190 °C | 40-55 | 100 | 5,2-5,7 | 0 | 345,6 | 33 |

Beispiel 39

Pigmentierter Lack

Nach dem beschriebenen Verfahren wurde der Pulverlack mit folgender Rezeptur hergestellt, appliziert und zwischen 190 und 200 °C eingebrannt.

348,0 Gew.-T. Polyester gemäß Beispiel C 1

172,0 Gew.-T. Vernetzer gemäß Ba 9

400,0 Gew.-T. Weißpigment $(TiO_2)$

50,0 Gew.-T. Verlaufmittel - Masterbatch

30,0 Gew.-T. Katalysator - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 40-50 | 111 | 6,2-6,4 | 0 | 576 | 26 |
| 20'/200 °C | 40-50 | 111 | 6,6-7,0 | 0 | 806,4 | 27 |
| 25'/200 °C | 40-50 | 111 | 7,0 | 0 | 806,4 | 27 |
| 20'/190 °C | 40-50 | 111 | 5,1-5,3 | 0 | 460,8 | 30 |
| 25'/190 °C | 50-60 | 100 | 5,0-5,5 | 0 | 460,8 | 29 |
| 30'/190 °C | 40-50 | 111 | 6,0-6,6 | 0 | 576 | 31 |

Beispiel 40

Pigmentierter Lack

Nach dem beschriebenen Verfahren wurde der Pulverlack mit folgender Rezeptur hergestellt, appliziert und zwischen 190 und 200 °C eingebrannt.

314,7 Gew.-T. Polyester gemäß Beispiel C 1

153,3 Gew.-T. Vernetzer gemäß Ra 9*

270,0 Gew.-T. Weißpigment (TiO$_2$)

45,0 Gew.-T. Verlaufmittel - Masterbatch

27,0 Gew.-T. Katalysator - Masterbatch

90,0 Gew.-T. DURCAL 5


* Die Lack-Kenndaten sind beim Einsatz des Vernetzers Bb 2 innerhalb
der Fehlergrenzen identisch.


| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 50-60 | 111 | 4,7-5,0 | 0 | 115 2 | 22 |
| 20'/200 °C | 50-60 | 111 | 5,1-6,1 | 0 | 345,6 | 20 |
| 25'/200 °C | 40-55 | 111 | 6,0-6,3 | 0 | 345,6 | 21 |
| 20'/190 °C | 50-60 | 111 | 3,8-4,1 | 0 | 115,2 | 24 |
| 25'/190 °C | 50-60 | 111 | 4,3-4,7 | 0 | 230,4 | 23 |
| 30'/190 °C | 50-60 | 111 | 4,8-5,5 | 0 | 230,4 | 25 |


Beispiel 41

Pigmentierter Lack

Nach dem beschriebenen Verfahren wurde der Pulverlack mit folgender Rezeptur hergestellt, appliziert und zwischen 190 und 200 °C eingebrannt.

53

349,2 Gew.-T. Polyester gemäß Beispiel C 9

170,8 Gew.-T. Vernetzer gemäß Ba 9

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 60-75 | 100 | 4,1-4,5 | 0 | 115,2 | 42 |
| 20'/200 °C | 60-80 | 100 | 4,7-5,2 | 0 | 230,4 | 41 |
| 25'/200 °C | 60 | 111 | 5,7-6,0 | 0 | 345,6 | 42 |
| 20'/190 °C | 50-60 | 100 | 3,9-4,2 | 0 | 115,2 | 46 |
| 25'/190 °C | 60-70 | 111 | 4,4-4,9 | 0 | 115,2 | 45 |
| 30'/190 °C | 50-70 | 111 | 5,2-5,7 | 0 | 230,4 | 45 |

Beispiel 42

Pigmentierter Lack

Nach dem beschriebenen Verfahren wurde der Pulverlack mit folgender Rezeptur hergestellt, appliziert und zwischen 190 und 200 °C eingebrannt.

371,7 Gew.-T. Polyester gemäß Beispiel C 11

148,3 Gew.-T. Vernetzer gemäß Ba 9

400,0 Gew.-T. Weißpigment ($TiO_2$)

 50,0 Gew.-T. Verlaufmittel - Masterbatch

 30,0 Gew.-T. Katalysator - Masterbatch

| Einbrenn-bedingungen | Mechanische Kenndaten | | | | | |
|---|---|---|---|---|---|---|
| Zeit/Temp. | SD | HB | ET | GS | Imp. rev. | GG 60° ⚡ |
| 15'/200 °C | 55-60 | 111 | 6,8-7,5 | 0 | 230,4 | 55 |
| 20'/200 °C | 50-60 | 111 | 7,4-7,9 | 0 | 576 | 54 |
| 25'/200 °C | 50-60 | 111 | 8,1-8,6 | 0 | 691,2 | 55 |
| 20'/190 °C | 60-65 | 111 | 5,2-5,7 | 0 | 230,4 | 57 |
| 25'/190 °C | 50-60 | 111 | 6,0-6,1 | 0 | 460,8 | 58 |
| 30'/190 °C | 50-60 | 111 | 6,7-7,3 | 0 | 576 | 57 |

Beispiel 43

Pigmentierter Lack

Nach dem beschriebenen Verfahren wurde der Pulverlack mit folgender Rezeptur hergestellt, appliziert und zwischen 190 und 200 °C eingebrannt.

349,1 Gew.-T. Polyester gemäß Beispiel C 1

170,9 Gew.-T. Vernetzer gemäß Bc 1

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 60 | 111 | ˃10 | 0 | ˃944,6 | 48 |
| 20'/200 °C | 60-70 | 111 | ˃10 | 0 | ˃944,6 | 50 |
| 25'/200 °C | 70-80 | 100 | ˃10 | 0 | ˃944,6 | 50 |
| 20'/190 °C | 60 | 111 | 9,8-˃10 | 0 | ˃944,6 | 54 |
| 25'/190 °C | 60-75 | 111 | ˃10 | 0 | ˃944,6 | 52 |
| 30'/190 °C | 70-80 | 111 | 9,8-˃10 | 0 | ˃944,6 | 55 |

Beispiel 44

Pigmentierter Lack

Nach dem beschriebenen Verfahren wurde der Pulverlack mit folgender Rezeptur hergestellt, appliziert und zwischen 190 und 200 °C eingebrannt.

347,9 Gew.-T. Polyester gemäß Beispiel C 1

172,1 Gew.-T. Vernetzer gemäß Bd 1

300,0 Gew.-T. Weißpigment (TiO$_2$)

 50,0 Gew.-T. Verlaufmittel - Masterbatch

 30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ≮ |
| 15'/200 °C | 50-60 | 111 | ≯10 | 0 | ≯944,6 | 48 |
| 20'/200 °C | 60-70 | 111 | ≯10 | 0 | ≯944,6 | 48 |
| 25'/200 °C | 60-70 | 125 | ≯10 | 0 | ≯944,6 | 46 |
| 20'/190 °C | 60-80 | 100 | ≯10 | 0 | ≯944,6 | 50 |
| 25'/190 °C | 60-70 | 111 | ≯10 | 0 | ≯944,6 | 52 |
| 30'/190 °C | 50-60 | 111 | ≯10 | 0 | ≯944,6 | 53 |

Beispiel 45

Pigmentierter Lack

Nach dem beschriebenen Verfahren wurde der Pulverlack mit folgender Rezeptur hergestellt, appliziert und zwischen 190 und 200 °C eingebrannt.

355,7 Gew.-T. Polyester gemäß Beispiel C 1
164,3 Gew.-T. Vernetzer gemäß Bd 2
300,0 Gew.-T. Weißpigment (TiO$_2$)
 50,0 Gew.-T. Verlaufmittel - Masterbatch
 30,0 Gew.-T. Katalysator - Masterbatch
100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ≮ |
| 15'/200 °C | 60-70 | 111 | ˃10 | 0 | ˃944,6 | 47 |
| 20'/200 °C | 60-70 | 111 | ˃10 | 0 | ˃944,6 | 49 |
| 25'/200 °C | 70-80 | 111 | ˃10 | 0 | ˃944,6 | 48 |
| 20'/190 °C | 70-80 | 111 | ˃10 | 0 | ˃944,6 | 50 |
| 25'/190 °C | 60-70 | 100 | ˃10 | 0 | ˃944,6 | 51 |
| 30'/190 °C | 60-75 | 111 | ˃10 | 0 | ˃944,6 | 53 |

Beispiel 46

Pigmentierter Lack

Nach dem beschriebenen Verfahren wurde der Pulverlack mit folgender Rezeptur hergestellt, appliziert und zwischen 190 und 200 °C eingebrannt.

58

344,4 Gew.-T. Polyester gemäß Beispiel C 1

175,6 Gew.-T. Vernetzer gemäß Be 1*

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

* Die Lack-Kenndaten sind beim Einsatz der Vernetzer Be 2 und Be 3 innerhalb der Fehlergrenzen identisch; Be 2 und Be 3 zeigen eine geringe Orangenschalenstruktur.

| Einbrenn-bedingungen | Mechanische Kenndaten | | | | | |
|---|---|---|---|---|---|---|
| Zeit/Temp. | SD | HB | ET | GS | Imp. rev. | GG 60° ✶ |
| 15'/200 °C | 50-60 | 125 | 5,0-5,2 | 0 | 115,2 | 19 |
| 20'/200 °C | 50-60 | 111 | 5,3-5,7 | 0 | 230,4 | 20 |
| 25'/200 °C | 60-65 | 125 | 6,0-6,5 | 0 | 115,2 | 19 |
| 20'/190 °C | 60-65 | 111 | 3,9-4,2 | 0 | 115,2 | 22 |
| 25'/190 °C | 50-60 | 125 | 4,4-4,8 | 0 | 230,4 | 24 |
| 30'/190 °C | 60-70 | 111 | 5,2-5,7 | 0 | 230,4 | 25 |

Beispiel 47

Pigmentierter Lack

Nach dem beschriebenen Verfahren wurde der Pulverlack mit folgender Rezeptur hergestellt, appliziert und zwischen 190 und 200 °C eingebrannt.

339,5 Gew.-T. Polyester gemäß Beispiel C 1

180,5 Gew.-T. Vernetzer gemäß Bf 1

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ⚹ |
| 15'/200 °C | 60-65 | 125 | 4,5-5,1 | 0 | 115,2 | 25 |
| 20'/200 °C | 60-70 | 125 | 5,4-5,7 | 0 | 230,4 | 28 |
| 25'/200 °C | 60-70 | 111 | 6,0-6,2 | 0 | 345,6 | 27 |
| 20'/190 °C | 60 | 111 | 3,9-4,5 | 0 | 115,2 | 30 |
| 25'/190 °C | 70-80 | 125 | 4,3-4,8 | 0 | 115,2 | 33 |
| 30'/190 °C | 70-80 | 111 | 4,7-5,3 | 0 | 230,4 | 34 |

Beispiel 48

Pigmentierter Lack

Nach dem beschriebenen Verfahren wurde der Pulverlack mit folgender Rezeptur hergestellt, appliziert und zwischen 190 und 200 °C eingebrannt.

349,1 Gew.-T. Polyester gemäß Beispiel C 1

170,9 Gew.-T. Vernetzer gemäß Bf 2

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 60 | 100 | 7,1-7,9 | 0 | 691,2 | 28 |
| 20'/200 °C | 60 | 100 | 8,2 | 0 | 691,2 | 28 |
| 25'/200 °C | 60-70 | 100 | 7,5-8,0 | 0 | 576 | 31 |
| 20'/190 °C | 70-80 | 111 | 4,8-5,8 | 0 | 230,4 | 34 |
| 25'/190 °C | 60-70 | 111 | 5,1-5,9 | 0 | 230,4 | 36 |
| 30'/190 °C | 70 | 111 | 5,4-6,9 | 0 | 345,6 | 35 |

Beispiel 49

Pigmentierter Lack

Nach dem beschriebenen Verfahren wurde der Pulverlack mit folgender Rezeptur hergestellt, appliziert und zwischen 190 und 200 °C eingebrannt.

362,7 Gew.-T. Polyester gemäß Beispiel C 1

157,3 Gew.-T. Vernetzer gemäß Bf 4

300,0 Gew.-T. Weißpigment ($TiO_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° * |
| 15'/200 °C | 60-70 | 111 | 7,1-7,5 | 0 | 460,8 | 43 |
| 20'/200 °C | 40-50 | 100 | 8,3-8,4 | 0 | 806,4 | 40 |
| 25'/200 °C | 70-80 | 100 | 7,0-7,2 | 0 | 460,8 | 42 |
| 20'/190 °C | 60-70 | 100 | 4,1-4,6 | 0 | 115,2 | 45 |
| 25'/190 °C | 70-80 | 111 | 4,5-4,9 | 0 | 115,2 | 47 |
| 30'/190 °C | 60-70 | 100 | 4,7-5,2 | 0 | 230,4 | 46 |

Beispiel 50

Pigmentierter Lack

Nach dem beschriebenen Verfahren wurde der Pulverlack mit folgender Rezeptur hergestellt, appliziert und zwischen 190 und 200 °C eingebrannt.

324,6 Gew.-T. Polyester gemäß Beispiel C 1

185,4 Gew.-T. Vernetzer gemäß Ba 4

300,0 Gew.-T. Weißpigment ($TiO_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ≠ |
| 15'/200 °C | 40-50 | 125 | 3,9-4,4 | 0 | 230,4 | 22 |
| 20'/200 °C | 40-50 | 125 | 5,9-6,4 | 0 | 230,4 | 22 |
| 25'/200 °C | 50-60 | 125 | 6,3-6,8 | 0 | 460,8 | 23 |
| 20'/190 °C | 50-60 | 125 | 3,2-3,8 | 0 | 115,2 | 25 |
| 25'/190 °C | 40-50 | 125 | 3,9-4,1 | 0 | 115,2 | 24 |
| 30'/190 °C | 50 | 125 | 4,5-4,7 | 0 | 230,4 | 26 |

Beispiel 51

Pigmentierter Lack

Nach dem beschriebenen Verfahren wurde der Pulverlack mit folgender Rezeptur hergestellt, appliziert und zwischen 190 und 200 °C eingebrannt.

```
328,6 Gew.-T. Polyester gemäß Beispiel C 1
191,4 Gew.-T. Vernetzer gemäß Ba 4
300,0 Gew.-T. Weißpigment (TiO₂)
 50,0 Gew.-T. Verlaufmittel - Masterbatch
 30,0 Gew.-T. Katalysator - Masterbatch
100,0 Gew.-T. DURCAL 5
```

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 45-55 | 100 | 6,3-6,8 | 0 | 345,6 | 21 |
| 20'/200 °C | 60 | 100 | 6,8-7,0 | 0 | 460,8 | 22 |
| 25'/200 °C | 50-60 | 111 | 7,2-7,4 | 0 | 576 | 21 |
| 20'/190 °C | 50-60 | 111 | 4,2-4,4 | 0 | 115,2 | 26 |
| 25'/190 °C | 60-70 | 100 | 5,1-5,5 | 0 | 115,2 | 26 |
| 30'/190 °C | 50-60 | 111 | 4,9-5,3 | 0 | 230,4 | 27 |

Beispiel 52

Pigmentierter Lack

Nach dem beschriebenen Verfahren wurde der Pulverlack mit folgender Rezeptur hergestellt, appliziert und zwischen 190 und 200 °C eingebrannt.

```
367,4 Gew.-T. Polyester gemäß Beispiel C 1
152,6 Gew.-T. Vernetzer gemäß Ba 4
300,0 Gew.-T. Weißpigment (TiO₂)
 50,0 Gew.-T. Verlaufmittel - Masterbatch
 30,0 Gew.-T. Katalysator - Masterbatch
100,0 Gew.-T. DURCAL 5
```

| Einbrenn-bedingungen | Mechanische Kenndaten | | | | | |
|---|---|---|---|---|---|---|
| Zeit/Temp. | SD | HB | ET | GS | Imp. rev. | GG 60° % |
| 15'/200 °C | 50-60 | 111 | 6,8-7,4 | 0 | 345,6 | 27 |
| 20'/200 °C | 40-50 | 111 | 8,1-8,3 | 0 | 460,8 | 26 |
| 25'/200 °C | 60 | 111 | 7,5-8,0 | 0 | 460,8 | 28 |
| 20'/190 °C | 50-60 | 111 | 7,4-8,1 | 0 | 576 | 31 |
| 25'/190 °C | 50-60 | 111 | 7,6-8,0 | 0 | 460,8 | 34 |
| 30'/190 °C | 50-60 | 111 | 7,5-7,7 | 0 | 576 | 35 |

Beispiel 53

Pigmentierter Lack

Nach dem beschriebenen Verfahren wurde der Pulverlack mit folgender Rezeptur hergestellt, appliziert und zwischen 190 und 200 °C eingebrannt.

334,3 Gew.-T. Polyester gemäß Beispiel C 1

185,7 Gew.-T. Vernetzer gemäß Bg 1

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ⪤ |
| 15'/200 °C | 50-60 | 100 | 4,1-4,8 | 0 | 460,8 | 22 |
| 20'/200 °C | 60 | 100 | 5,6-6,2 | 0 | 576 | 22 |
| 25'/200 °C | 50-60 | 100 | 5,8-6,7 | 0 | 576 | 23 |
| 20'/190 °C | 60 | 100 | 3,5-4,2 | 0 | 115,2 | 25 |
| 25'/190 °C | 50-60 | 100 | 4,4-4,5 | 0 | 115,2 | 24 |
| 30'/190 °C | 70-80 | 100 | 4,8-4,9 | 0 | 230,4 | 26 |

Beispiel 54

Pigmentierter Lack

Nach dem beschriebenen Verfahren wurde der Pulverlack mit folgender Rezeptur hergestellt, appliziert und zwischen 190 und 200 °C eingebrannt.

343,2 Gew.-T. Polyester gemäß Beispiel C 1

176,8 Gew.-T. Vernetzer gemäß Bg 2

300,0 Gew.-T. Weißpigment (TiO$_2$)

50,0 Gew.-T. Verlaufmittel - Masterbatch

30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° ≮ |
| 15'/200 °C | 40-50 | 100 | 7,1-8,0 | 0 | 576 | 22 |
| 20'/200 °C | 40-50 | 100 | 7,2-7,7 | 0 | 691,2 | 23 |
| 25'/200 °C | 40-50 | 111 | 7,6-8,1 | 0 | 806,4 | 22 |
| 20'/190 °C | 40-50 | 100 | 4,8-5,2 | 0 | 230,4 | 22 |
| 25'/190 °C | 40-60 | 100 | 5,3-5,7 | 0 | 345,6 | 22 |
| 30'/190 °C | 40-60 | 100 | 4,6-5,9 | 0 | 345,6 | 23 |

Beispiel 55

Pigmentierter Lack

Nach dem beschriebenen Verfahren wurde der Pulverlack mit folgender Rezeptur hergestellt, appliziert und zwischen 190 und 200 °C eingebrannt.

354,6 Gew.-T. Polyester gemäß Beispiel C 1

165,4 Gew.-T. Vernetzer gemäß Bg 6

300,0 Gew.-T. Weißpigment (TiO$_2$)

 50,0 Gew.-T. Verlaufmittel - Masterbatch

 30,0 Gew.-T. Katalysator - Masterbatch

100,0 Gew.-T. DURCAL 5

| Einbrenn-bedingungen | Mechanische Kenndaten | | | | | |
|---|---|---|---|---|---|---|
| Zeit/Temp. | SD | HB | ET | GS | Imp. rev. | GG 60° |
| 15'/200 °C | 60-70 | 100 | 5,0-5,3 | 0 | 460,8 | 36 |
| 20'/200 °C | 60-70 | 111 | 5,2-6,2 | 0 | 460,8 | 35 |
| 25'/200 °C | 60-70 | 111 | 5,3-6,0 | 0 | 576,0 | 37 |
| 20'/190 °C | 70-80 | 111 | 3,5-3,9 | 0 | 115,2 | 40 |
| 25'/190 °C | 60-70 | 125 | 4,1-4,3 | 0 | 115,2 | 42 |
| 30'/190 °C | 80-85 | 111 | 4,0-4,8 | 0 | 230,4 | 42 |

E Vergleichsbeispiele

I Allgemeine Herstellungsvorschrift (Partiell blockierte Polyisocyanate ohne Dünnschichtdestillation)

Zu einem Mol Polyisocyanat werden bei 90 bis 110 °C ein Mol Blokkierungsmittel so zugegeben, daß die Temperatur des Reaktionsgemisches nicht über 120 °C ansteigt. Nach beendeter Blockierungsmittelzugabe wird noch so lange erhitzt, bis der NCO-Gehalt des Reaktionsgemisches den berechneten Wert erreicht hat. Die chemischen und physikalischen Kenndaten der Reaktionsprodukte sind in der folgenden Tabelle zusammengefaßt:

| Beispiel E I | Poly-isocyanat | Blockierungs-mittel | NCO-Gehalt in Gew.-% frei | NCO-Gehalt in Gew.-% gesamt | Polyisocyanat monomer Gew.-% | Viskosität in mPa·s bei °C 25 | 30 | 40 | 50 | 70 |
|---|---|---|---|---|---|---|---|---|---|---|
| 1 | IPDI | Caprolactam | 12,4 | 24,85 | 15,8 | 381000 | 142000 | 27800 | 6650 | 690 |
| 2 | IPDI | MEK-oxim | 12,4 | 26,0 | 15,3 | 27000 | 14750 | 3390 | 1100 | 195 |
| 3 | HDI | Caprolactam | 14,7 | 29,75 | 14,5 | 90 | 70 | 60 | 40 | <30 |
| 4 | HDI | MEK-oxim | 16,4 | 31,5 | 14,5 | 75 | 55 | 35 | 30 | <30 |
| 5 | DI51 | Caprolactam | 14,5 | 29,0 | 14,3 | 190 | 140 | 70 | 40 | <30 |
| 6 | DI51 | MEK-oxim | 16,2 | 31,7 | 17,7 | 110 | 85 | 45 | 30 | <30 |
| 7 | HMDI | Caprolactam | 10,9 | 21,9 | 17,0 | 880000 | 300000 | 60000 | 9000 | 1100 |

E II Vergleichsbeispiele (Polyisocyanat-Harnstoff-Addukte)

Gemäß der allgemeinen Herstellungsvorschrift B für die blockierten Polyisocyanat-Harnstoff-Addukte wurden die partiell blockierten Polyisocyanate gemäß E I mit der Aminkomponente zur Reaktion gebracht.

69

In der folgenden Tabelle sind die chemischen und physikalischen Kenndaten zusammengefaßt:

| Beispiele E II | Polyisocyanat gemäß E I | Aminkompo- nente | NCO-Gehalt in Gew.-% latent | NCO-Gehalt in Gew.-% frei | Schmelz- bereich in °C | Glasumwand- lungstemper. (DTA) °C |
|---|---|---|---|---|---|---|
| 1 | 1 | 4.4'-Diami- nodicyclo- hexylmethan | 9,4 | 0,2 | 158-160 | 19-110 |
| 2 | 3 | " | 10,6 | 0,1 | 102-104 | 17- 33 |
| 3 | 5 | " | 10,8 | 0 | 90- 92 | 14- 34 |
| 4 | 7 | " | 8,5 | 0 | 160-162 | 26- 85 |
| 5 | 1 | IPD | 9,9 | 0 | 141-145 | 20- 83 |

In allen Beispielen trat bereits während der Aminzugabe mehr oder minder starke Unverträglichkeit (Klumpenbildung) auf, so daß die Reaktion zwischen NCO- und Aminogruppen nicht einwandfrei ablief. Die Polyisocyanat-Harnstoff-Addukte wiesen noch eine schwache Basizität auf.

E III Lack-Vergleichsbeispiele

1. PUR-Pulverlacke auf Basis von Bindemittelkombinationen - Vernetzer gemäß E II und Polyester gemäß C 1 - in Verbindung mit den erfinderisch eingesetzten Zuschlagstoffen führen zu Lackfilmen mit mittelstarker bis starker Orangenschalenstruktur und erhöhten Glanzwerten bzw. zu feinkörnigen bis rauhen Oberflächen. Zudem neigen die Lackfilme aufgrund der Restbasizität mehr oder minder stark zur Vergilbung.
2. PUR-Pulverlacke auf Basis von Vernetzern, deren Reaktionstemperatur während des Herstellungsprozesses > 80 °C lag, in Kombination mit den Polyestern gemäß C und den erfinderisch eingesetzten Zuschlagstoffen zeigen eine ausgeprägte Orangenschalenstruktur sowie erhöhten Glanz.

**Patentansprüche**

1. PUR-Pulverlacke für matte Überzüge auf der Grundlage von Mischungen aus hydroxylgruppenhaltigen Polymeren und Polyisocyanat-Harnstoff-Addukten sowie üblichen Zuschlagstoffen,
dadurch gekennzeichnet,
daß die Mischungen aus
A partiell oder vollständig blockierten Polyisocyanat-Harnstoffaddukten aus Polyisocyanaten und Polyaminen mit einem NCO-Gehalt von 8 bis 15 Gew.-% und einem freien NCO-Gehalt bis zu 4 Gew.-% und
B aus hydroxylgruppenhaltigen Polaren mit mehr als zwei OH-Gruppen im Molekül
bestehen,
wobei das Polyisocyanat der Komponente A ein halbblockiertes Polyisocyanat mit einem Siedepunkt im Vakuum von 0,133 mbar ist und erhalten wurde durch Zugabe des Blockierungsmittels zu der 5- bis 20- fachen Menge an Polyisocyanat und anschließende Dünnschichtdestillation zur Entfernung von monomerem, unblockiertem Polyisocyanat bis auf einen Gehalt von bis zu 6,5 Gew.-%.

2. PUR-Pulverlacke nach Anspruch 1,
dadurch gekennzeichnet,
daß die Komponente A vorzugsweise einen NCO-Gehalt von g bis 13 Gew.-% und einen freien NCO- Gehalt bis zu 3 % aufweist.

3. PUR-Pulverlacke nach Anspruch 1,
dadurch gekennzeichnet,
daß das Polyisocyanat der Komponente A mit einem Gehalt an monomerem, unblockiertem Polyisocyanat von vorzugsweise bis zu 2,5 Gew.-% eingesetzt wird.

4. PUR-Pulverlacke nach Anspruch 1,
dadurch gekennzeichnet,
daß die Polyisocyanate in A aliphatische oder (cyclo)aliphatische Diisocyanate sind.

5. PUR-Pulverlacke nach Anspruch 4,
dadurch gekennzeichnet,
daß bevorzugte Diisocyanate Hexamethylendiisocyanat-1.6, 2-Methylpentandiisocyanat-1.5 und 2.2.4-(2.4.4)-Trimethylhexamethylendiisocyanat-1.6 sind.

6. PUR-Pulverlacke nach Anspruch 4,
dadurch gekennzeichnet,
daß das Diisocyanat in A ganz bevorzugt Isophorondiisocyanat ist.

7. PUR-Pulverlacke nach Anspruch 1,
dadurch gekennzeichnet,
daß das Polyamin in A ein aliphatisches, cycloaliphatisches, heterocyclisches oder aromatisches Diamin oder Polyamin ist.

8. PUR-Pulverlacke nach Anspruch 7,
dadurch gekennzeichnet,
daß bevorzugte Diamine oder Polyamine in A Dodecamethylendiamin1.12, 3.3'-Dimethyl-4.4'-diaminodicyclohexylmethan, Tetraethylenpentamin, Pentaethylenhexamin oder 4.4'-Diaminodiphenylmethan sind.

9. PUR-Pulverlacke nach Anpruch 7,
dadurch gekennzeichnet,
daß ganz besonders bevorzugte Diamine in A 4.4'-Diaminodicyclohexylmethan, Bis-(1.4-aminomethyl)-cyclohexan und Isophorondiamin sind.

10. PUR-Pulverlacke nach Anspruch 7,
dadurch gekennzeichnet,
daß das Diamin in A ein Gemisch aus Isophorondiamin und aliphatischen Diaminen, bevorzugt 2.2.4-(2.4.4)-Trimethylhexamethylendiamin-1.6 ist.

11. PUR-Pulverlacke nach den Ansprüchen 1 bis 10,
dadurch gekennzeichnet,
daß das Amin/Isocyanatgruppen-Verhältnis von A von 1 : 1 bis 1 : 1,3 beträgt.

12. PUR-Pulverlacke nach Anspruch 11,
dadurch gekennzeichnet,
daß das Amin/Isocyanatgruppen-Verhältnis von A bevorzugt 1 : 1 bis 1 : 1,2 beträgt.

13. PUR-Pulverlacke nach Anspruch 1,
dadurch gekennzeichnet,
daß die Komponente B hydroxylgruppenhaltige Polyester mit einer OH-Funktionalität von 2,5 bis 5, einem mittleren Molekulargewicht von 1 800 bis 5 000, einer OH-Zahl von 25 bis 120 mg KOH/g, einer Viskosität von < 80 000 m Pa•s und einem Schmelzpunkt ≧ 70 °C bis ≦ 120 °C, sind.

14. PUR-Pulverlacke nach Anspruch 13,
dadurch gekennzeichnet,
daß die Komponente B hydroxylgruppenhaltige Polyester mit einer OH-Funktionalität von 3 bis 4,2, einem mittleren Molekulargewicht von 2 300 bis 4 500, einer OH-Zahl von 30 bis 90 mg KOH/g, einer Viskosität von < 50 000 m Pa•s und einem Schmelzpunkt ≧ 75 °C bis ≦ 100 °C, sind.

**15.** PUR-Pulverlacke nach Anspruch 13,
dadurch gekennzeichnet,
daß die Komponente B hydroxylgruppenhaltige Polyester mit einer OH-Funktionalität von 3,5 bis 3,9, einem mittleren Molekulargewicht von 2 800 bis 3 500, einer OH-Zahl von 35 bis 85 mg KOH/g, einer Viskosität von < 40 000 m Pa•s und einem Schmelzpunkt ≥ 75 °C bis ≤ 100 °C, sind.

**16.** PUR-Pulverlacke nach den Ansprüchen 1 bis 15,
dadurch gekennzeichnet,
daß das OH/NCO-Verhältnis von 1 : 0,6 bis 1 : 1,2 beträgt.

**17.** PUR-Pulverlacke nach Anspruch 16,
dadurch gekennzeichnet,
daß das OH/NCO-Verhältnis von 1 : 0,8 bis 1 : 1,1 beträgt.

**18.** PUR-Pulverlacke nach Anspruch 16,
dadurch gekennzeichnet,
daß das OH/NCO-Verhältnis von 1 : 1 beträgt.

**19.** PUR-Pulverlacke nach den Ansprüchen 1 bis 18,
dadurch gekennzeichnet,
daß in der PUR-Chemie übliche Katalysatoren in Mengen von 0,05 bis 1,5 Gew.-% eingesetzt werden.

**20.** PUR-Pulverlacke nach Anspruch 19,
dadurch gekennzeichnet,
daß in der PUR-Chemie übliche Katalysatoren in Mengen von 0,1 bis 0,5 Gew.-% eingesetzt werden.

**21.** PUR-Pulverlacke nach den Anprüchen 1 bis 20,
dadurc gekennzeichnet,
daß Pigmente und/oder Füllstoffe in Mengen bis zu 45 Gew.-% eingesetzt werden.

**Claims**

**1.** Polyurethane powder coatings for matt coatings on the basis of mixtures of hydroxyl-group-containing polymers, polyisocyanate-urea adducts and the usual additives, characterized in that the mixtures consist of
A partially or completely blocked polyisocyanate-urea adducts of polyisocyanate and polyamines having an NCO content of 8 to 15% by weight and a free NCO content of up to 4% by weight and
B hydroxyl-group-containing polymers having more than two OH groups in the molecule,
wherein the polyisocyanate of component A is a semi-blocked polyisocyanate having a boiling point in vacuo of 0.133 mbar and was obtained by the addition of the blocking agent to 5 to 20 times the quantity of polyisocyanate, followed by thin layer distillation for the removal of monomeric unblocked polyisocyanate to a content of up to 6.5% by weight.

**2.** Polyurethane powder coatings according to claim 1, characterized in that the component A preferably has an NCO content of 9 to 13% by weight and a free NCO content up to 3%.

**3.** Polyurethane powder coatings according to claim 1, characterized in that the polyisocyanate of component A is used with a content of monomeric unblocked polyisocyanate of preferably up to 2.5% by weight.

**4.** Polyurethane powder coatings according to claim 1, characterized in that the polyisocyanates in A are aliphatic or (cyclo)aliphatic diisocyanates.

**5.** Polyurethane powder coatings according to claim 4, characterized in that preferred diisocyanates are hexamethylene1.6-diisocyanate, 2-methylpentane-1.5-diisocyanate and 2.2.4(2.4.4)-trimethylhexamethylene-1.6-diisocyanate.

**6.** Polyurethane powder coatings according to claim 4, characterized in that the diisocyanate in A is very preferably isophorone diisocyanate.

7. Polyurethane powder coatings according to claim 1, characterized in that the polyamine in A is an aliphatic, cycloaliphatic, heterocyclic or aromatic diamine or polyamine.

8. Polyurethane powder coatings according to claim 7, characterized in that preferred diamines or polyamines in A are dodecamethylene-1.12-diamine, 3.3'-dimethyl-4.4'-diaminodicyclohexyl methane, tetraethylene pentamine, pentaethylene hexamine or 4.4'-diaminodiphenyl methane.

9. Polyurethane powder coatings according to claim 7, characterized in that very particularly preferred diamines in A are 4.4'-diaminodicyclohexyl methane, bis-(1.4-aminomethyl)-cyclohexane and isophorone diamine.

10. Polyurethane powder coatings according to claim 7, characterized in that the diamine in A is a mixture of isophorone diamine and aliphatic diamines, preferably 2.2.4(2.4.4)-trimethylhexamethylene-1.6-diamine.

11. Polyurethane powder coatings according to claims 1 to 10, characterized in that the amine/isocyanate group ratio in A is from 1 : 1 to 1 : 1.3.

12. Polyurethane powder coatings according to claim 11, characterized in that the amine/isocyanate group ratio in A is preferably 1 : 1 to 1 : 1.2.

13. Polyurethane powder coatings according to claim 1, characterized in that the component B comprises hydroxyl-group-containing polyesters having an OH functionality of 2.5 to 5, a mean molecular weight of 1800 to 5000, an OH number of 25 to 120 mg KOH/g, a viscosity of < 80 000 mpa.s and a melting point of $\geq 70°0$ to $\leq 120°C$.

14. Polyurethane powder coatings according to claim 13, characterized in that the component B comprises hydroxyl-groupcontaining polyesters having an OH functionality of 3 to 4.2, a mean molecular weight of 2300 to 4500, an OH number of 30 to 90 mg KOH/g, a viscosity of < 50 000 mPa.s and a melting point of $\geq 75°0$ to $\leq 100°C$.

15. Polyurethane powder coatings according to claim 13, characterized in that the component B comprises hydroxyl-group-containing polyesters having an OH functionality of 3.5 to 3.9 a mean molecular weight of 2800 to 3500, an OH number of 35 to 85 mg KOH/g, a viscosity of < 40 000 mPa.s and a melting point of $\geq 75°C$ to $\leq 100°C$.

16. Polyurethane powder coatings according to claims 1 to 15, characterized in that the OH/NCO ratio is from 1 : 0.6 to 1 : 1.2.

17. Polyurethane powder coatings according to claim 16, characterized in that the OH/NCO ratio is from 1 : 0.8 to 1 : 1.1.

18. Polyurethane powder coatings according to claim 16, characterized in that the OH/NCO ratio is 1 : 1.

19. Polyurethane powder coatings according to claims 1 to 18, characterized in that catalysts customary in polyurethane chemistry are used in quantities from 0.05 to 1.5% by weight.

20. Polyurethane powder coatings according to claim 19, characterized in that catalysts customary in polyurethane chemistry are used in quantities of 0.1 to 0.5% by weight.

21. Polyurethane powder coatings according to claims 1 to 20, characterized in that pigments and/or fillers are used in quantities of up to 45% by weight.

**Revendications**

1. Laques en poudre PUR pour des recouvrements mats sur la base de mélanges de polymères contenant des groupes hydroxyles et d'adducts urée-polyisocyanate, ainsi que des fondants usuels, caractérisées en ce que les mélanges consistent en

A - des adducts, partiellement ou complètement bloqués, d'urée-polyisocyanate à base de polyisocyanates et de polyamines ayant une teneur en NCO de 8 à 15 % en poids et une teneur en NCO libre allant jusqu'à 4 % en poids et

B - des polymères contenant des groupes hydroxylés ayant plus de 2 groupes OH dans la molécule,

dans lesquels le polyisocyanate du composant A est un polyisocyanate a demi bloqué, ayant un point d'ébullition sous vide de 0,133 mbar et obtenu par addition de l'agent de blocage en quantités de 5 à 20 fois celle de polyisocyanate et distillation en couche mince consécutive pour l'élimination de polyisocyanate monomère, non bloqué jusqu'à une teneur allant jusqu'à 6 % en poids.

2. Laques en poudre PUR selon la revendication 1, caractérisées en ce que le composant A possède de préférence une teneur en NCO de 9 à 13 % en poids et une teneur en NCO libre allant jusqu'à 3

3. Laques en poudre PUR selon la revendication 1, caractérisées en ce que le polyisocyanate des composants A est mis en oeuvre avec une teneur en polyisocyanate non bloqué, monomérique de préférence jusqu'à 2,5 % en poids.

4. Laques en poudre PUR selon la revendication 1, caractérisées en ce que les polyisocyanates dans A sont des diisocyanates aliphatiques ou (cyclo) aliphatiques.

5. Laques en poudre PUR selon la revendication 4, caractérisées en ce que les diisocyanates préférés sont l'hexaméthylène diisocyanate-1,6, le 2-méthylpentanediisocyanate-1,5 et le 2,2,4-(2,4,4)-triméthylhexnméthylènediisocyanate-1,6.

6. Laques en poudre PUR selon la revendication 4, caractérisées en ce que le dlisocyanate dans A tout à fait préféré est l'isophorone diisocyanate.

7. Laques en poudre PUR selon la revendication 1, caractérisées en ce que la polyamine dans A est une diamine ou une polyamine aliphatique, cycloaliphatique, hétérocyclique ou aromatique.

8. Laques en poudre PUR selon la revendication 7, caractérisées en ce que les diamines ou les polyamines préférées dans A sont la dodécaméthylène-diamine-1,12, le 3,3'-diméthyl-4,4-diaminodicyclohexylméthane, la tétraéthylènepentamine, la pentaéthylènehexamine ou le 4,4'-diaminodiphénylméthane.

9. Laques en poudres PUR selon la revendication 7, caractérisées en ce que les diamines tout particulièrement préférées dans A, sont le 4,4'-diaminocyclohexylméthane,le bis-(1,4-aminométhyl)-cyclohexane et l'isophorone diamine.

10. Laques en poudres PUR selon la revendication 7, caractérisées en ce que la diamine dans A est un mélange d'isophoronediamine et de diamines aliphatiques, de préférence la 2,2,4-(2,4,4)-triméthylhexaméthylènediamine-1,6.

11. Laques en poudre PUR selon les revendications 1 à 10, caractérisées en ce que le rapport amine/groupes isocyanate de A s'élève de 1:1 à 1:1,3.

12. Laques on poudre PUR selon la revendication 11, caractérisées en ce que le rapport amine/groupes isocyanate de A s'élève de préférence à 1:1 à 1:1,2.

13. Laques en poudre PUR selon la revendication 1, caractérisées en ce que les composants B sont des polyesters contenant des groupes hydroxyle avec une fonctionnalité on hydroxyle de 2,5 à 5, un poids moléculaire moyen de 1800 à 5000, un indice d'hydroxyle de 25 à 120 mg KOH/g, une vigcosité de < 80000 mPa.s et un point de fusion $\geq$ 70°C à $\leq$ 120°C.

14. Laques en poudre PUR selon la revendication 13, caractérisées en ce que les composants B sont des polyesters renfermant des groupes hydroxyle avec une fonctionnalité des hydroxyles de 3 à 4,2, un poids moléculaire moyen de 2300 à 4500, un indice d'hydroxyle de 30 à 90 mg KOH/g, une viscosité de ≤ 50000 mPa.s et un point de fusion ≥ 75°C à ≤ 100°C.

**15.** Laques en poudre PUR selon la revendication 13, caractérisées en ce que les composants B sont des polyesters renfermant des groupes hydroxyle avec une fonctionnalité en hydroxyle de 3,5 à 3,9, un poids moléculaire moyen de 2800 à 3500, un indice d'hydroxyle de 35 à 85 mg KOH/g, une viscosité de < 40000 mpa.S et un point de fusion allant de ≥ 75°C à ≤ 100°C.

**16.** Laques en poudre PUR selon les revendications 1 à 15, caractérisées en ce le rapport OH/NCO s'élève à 1:0,6 à 1:1,2.

**17.** Laques en poudre PUR selon la revendication 16, caractérisées en ce que le rapport OH/NCO s'élève à 1:0,8 à 1:1,1.

**18.** Laques en poudre PUR selon la revendication 16, caractérisées en ce que le rapport OH/NCO s'élève à 1:1.

**19.** Laques en poudre PUR selon les revendications 1 à 18, caractérisées en ce que des catalyseurs usuels dans la chimie PUR sont mis en oeuvre dans des quantités allant de 0,05 à 1,5 % en poids.

**20.** Laques en poudre PUR selon la revendication 19, caractérisées en ce que des catalyseurs usuels dans la chimie PUR sont mis en oeuvre dans des quantités allant de 0,1 à 0,5 % en poids.

**21.** Laques en poudre PUR selon les revendications 1 à 20, caractérisées en ce que les pigments et/ou les substances de remplissage sont mis en oeuvre dans des quantités allant jusqu'à 45 % en poids.